# EUROPÄISCHE PATENTSCHRIFT

(11) **EP 0 305 391 B1**
(45) Veröffentlichungstag und Bekanntmachung des Hinweises auf die Patenterteilung: **06.09.1995**
(21) Anmeldenummer: 87903298.5
(22) Anmeldetag: 12.05.1987
(51) Int. Cl.: B64D 9/00, B60P 1/38, B65G 35/04

(54) **EINRICHTUNG ZUM BELADEN EINES LADERAUMS INSBESONDERE EINES FLUGZEUGES MIT STÜCKGUT**
DEVICE FOR LOADING PACKAGES INTO A STORAGE HOLD, ESPECIALLY OF AN AIRCRAFT
DISPOSITIF POUR CHARGER DES COLIS DANS UNE SOUTE A BAGAGES, NOTAMMENT D'UN AVION

(30) Priorität: 12.05.1986 DE 3615927
(43) Veröffentlichungstag der Anmeldung: 08.03.1989
(60) Teilanmeldung: 90112684.7
(73) Patentinhaber: SCANDINAVIAN BELLYLOADING COMPANY AKTIEBOLAG, S-220 12 Lund (SE)
(72) Erfinder: HELMNER, Anders, S-222 48 Lund (SE)
(74) Vertreter: KUHNEN, WACKER & PARTNER
(86) Internationale Anmeldenummer: EP8700246
(87) Internationale Veröffentlichungsnummer: WO8706909

(56) Entgegenhaltungen:
- DE-A- 3 413 528
- US-A- 2 129 796
- US-A- 3 704 798
- US-A- 3 841 510
- US-A- 3 876 089

## Beschreibung

Die Erfindung betrifft eine Einrichtung zum Beladen eines Laderaums insbesondere eines Flugzeugs mit Stückgut nach dem Oberbegriff des Anspruchs 1.

Beispielsweise Stauräume für Gepäck von kleineren Flugzeugen sind häufig mit geringer Höhe im unteren Teil des Rumpfes angeordnet und in Längsrichtung des Rumpfes relativ langgestreckt. Wenn hierin Stückgut wie Fluggastgepäck verstaut werden soll, so müssen die ersten Stücke tief in den Laderaum hinein bis in den Bereich von dessen Rückwand gebracht werden, wonach der Laderaum von der Rückwand her fortschreitend bis in den Bereich der Beschickungsöffnung gefüllt werden kann. Dies ist umständlich und zeitraubend.

Zur Erleichterung der Beschickung und Entladung eines solches Laderaumes eines Flugzeugs ist es aus der Literaturstelle SPEEDNEWS vom 01. Juni 1984 bekanntgeworden, eine solche Einrichtung entsprechend dem Oberbegriff des Anspruchs 1 auszubilden.

Das dortige Transportorgan besteht aus drei von einander getrennten Elementen, die zur Anpassung an die Wölbung des Bodens des Laderaums gegeneinander abgewinkelt sind.

Das erste Transportelement als Hauptelement ist mittig und horizontal angeordnet und besteht aus zwei zugfesten Bändern, die am rückwärtigen Ende des Laderaums auf Rollen aufwickelbar sind, und einer teppichartigen Transportunterlage, die sich in Flugrichtung nach vorne an die Bänder anschließt und auf einer vorderung Rolle oder Walze in Flugrichtung vor der Beschickungsöffnung aufwickelbar ist. An der Verbindungsstelle zwischen den beiden Bändern und der teppichartigen Transportunterlage ist eine Laderückwand angeordnet, die im Zuge des Beschickungsvorganges von einer zur Beschickungsöffnung benachbarten Stellung fortschreitend nach hinten bewegbar ist, wobei die beiden Bänder auf ihren Rollen zunehmend aufgewickelt und die teppichartige Transportunterlage von ihrer Walze zunehmend abgewickelt wird, bis die Laderückwand schließlich im Bereich der hinteren Laderaumwand steht und die teppichartige Transportunterlage sich über die gesamte Länge des Laderaums erstreckt.

Das zweite Transportelement ist eine teppichartige Transportunterlage, die nach Art eines Endlosriemens um eine vordere und hintere Umlenkrolle oder -walze geführt ist, wobei die hintere Umlenkwalze in Höhe der hinteren Aufwickelrollen für die Bänder und die vordere Umlenkwalze in Höhe der vorderen Aufwickelwalze für das mittlere Transportelement angeordnet, gegenüber deren Achsen jedoch geneigt sind. Das zweite Transportelement ist an der der Beschickungsöffnung gegenüberliegenden Seite des Laderaums angeordnet.

Das dritte Transportelement ist ebenfalls eine teppichartige Transportunterlage, die nach Art eines Endlosriemens um eine hintere Umlenkwalze in Höhe der Aufwickelrollen für die Bänder und um eine vordere Umlenkwalze umgelenkt ist, die jedoch in der Nachbarschaft des in Flugrichtung hinteren Randes der Beschickungsöffnung angeordnet ist. Dadurch ist das dritte Transportelement kürzer als das erste und das zweite Transportelement und spart in seiner Längserstreckung die Beschickungsöffnung aus. Die Umlenkwalzen für das dritte Transportelement sind entsprechend gegenüber der Horizontalen geneigt angeordnet, so daß das horizontale erste Transportelement mit den beiden seitlichen zweiten und dritten Transportelementen eine Rinne bildet, deren Umriß polygonförmig an die Wölbung des Bodens des Flugzeugrumpfes annähernd angepaßt ist.

Ein motorisches Antrieb für die Einrichtung ist aus der im wesentlichen nur zeichnerischen Darstellung dieser Literaturstelle nicht ersichtlich. Es wird jedoch unterstellt, daß mit einem motorischen Antrieb gearbeitet wird. Aufgrund der konstruktiven Bedingungen kann dieser sinnvoll nur an der Laderückwand angreifen und diese bewegen, wodurch die Laderückwand das mittlere horizontale Transportelement derart hin- und herbewegt, daß bei einer Bewegung im Beladungssinne die Bänder zunehmend auf den hinteren Aufwickelrollen aufgewickelt und die teppichartige Transportunterlage von ihrer Aufwickelwalze abgewickelt wird, und umgekehrt bei einer Bewegung im Entladungssinne. Die Laderückwand überspannt auch die Transportunterlagen der beiden seitlichen Transportelemente und ist offensichtlich an diesen befestigt, so daß Ober einen solchen Antrieb auch die nach Art eines Endlosriemens ausgebildeten Transportunterlagen der seitlichen Transportelemente mitbewegt werden.

Diese bekannte Einrichtung ermöglicht zwar ein Abstellen sämtlicher Gepäckstücke oder dergl. im Bereich der Beschickungsöffnung, ohne die dahinterliegenden Teile des Laderaums zu betreten, und gestattet dennoch eine vollständige Befüllung des Laderaums sowie anschließend eine entsprechende Entladung. Die bekannte Einrichtung weist jedoch eine ganze Reihe gravierender Nachteile auf.

So ist bei einer Verwendung von drei getrennten und unabhängig voneinander gelagerten Transportunterlagen nicht nur eine Beeinträchtigung des Ladeguts durch den Spalt zwischen den Transportelementen kaum zu vermeiden, sondern insbesondere die praktische Bewerkstelligung des Antriebs schwierig; in der Literaturstelle ist demzufolge auch kein Ansatzpunkt für die konstruktiv konkrete Ausbildung des Antriebs erkennbar. Dabei ist zu bedenken, daß das Ladegut sehr erhebliches Gewicht besitzt und die Transportunterlage mit dem daraufliegenden hohen Ladegutgewicht unter überwindung der bodenseitigen Reibung gezogen werden muß, wofür ganz erhebliche Kräfte erforderlich sind. Im Falle einer Einleitung dieser Kräfte über die Laderückwand muß diese demzufolge sehr erheblichen Krafteinleitungen standhalten und somit konstruktiv in besonderer Weise ausgebildet und geführt werden, wofür keine konstruktive Lösung zur Verfügung steht. Im Bereich der Laderückwand angeordnete Antriebselemente stören überdies im Laderaum.

Zwar wirkt die stärkste Belastung auf den horizontalen Mittelteil des Transportorgans, der durch die horizontale Transportunterlage des ersten Transportelementes gebildet ist, jedoch wirken auch auf die umlaufenden seitlichen bandförmigen Transportunterlagen immer noch sehr erhebliche Gewichtskräfte vom Ladegut her. Während die Transportunterlage des ersten, mittleren Transportelementes unmittelbar auf dem Boden des Laderaums gleiten kann, so daß für annehmbare Gleitbedingungen gesorgt werden kann, laufen die beiden Abschnitte der seitlichen Endlosbänder aufeinander und bewegen sich im Zuge des Be- und Entladevorganges gegensinnig zueinander. Hierdurch treten sehr erhebliche Reibungskräfte zwischen den Abschnitten der textilen Transportunterlage auf, die wiederum erhöhte Antriebskräfte erfordern und zu einem schnellen Verschleiß oder Beschädigungen der seitlichen Transportunterlagen führen.

Infolge der Neigung der seitlichen Transportunterlagen treten dort unter der Gewichtskraft des Ladeguts weiterhin seitliche, zur Mitte hin wirkende Kräfte auf, welche die Tendenz haben, die seitlichen Transportunterlagen nach innen zu kontrahieren. Durch die dadurch hervorgerufene Faltenbildung treten im Verein mit den schlechten Gleitbedingungen Reibungsspitzen auf, die den Verschleiß und die Zerstörung der seitlichen Transportunterlagen noch erheblich beschleunigen.

Der wohl wesentlichste Nachteil ist jedoch, daß die vom Antrieb her aufgebrachten Antriebskräfte zur Bewegung des Transportorgans in irgendeiner Weise von der Flugzeugzelle abgefangen werden müssen. Dadurch werden in die Flugzeugzelle schlecht kontrollierbare Kräfte eingeführt, die zu unkontrollierten Belastungsspitzen tragender Bauteile und so zur Gefahr von überlastungen führen. Diese Gefahr tritt überdies nicht nur bei Be- und Entladung am Boden, sondern auch im Flug auf, insbesondere, wenn der Laderaum nur teilweise gefüllt ist und die Laderückwand daher in einer mittleren Stellung steht, um das Ladegut an wesentlichen Trägheitsbewegungen zu hindern. Wenn somit, etwa beim Abfang aus einem schnellen Sinkflug oder bei einer Notlandung, bei der Trägheitskräfte vom 1,5-fachen des Eigengewichts auftreten können, das Ladegut gegen die Laderückwand drückt, so muß eine Bewegung der Laderückwand unter diesen erheblichen Kräften durch die Haltekraft des Antriebs und dessen Abstützung abgefangen werden, was zu einer analogen Belastung der Zelle des Flugzeugrumpfes führt wie bei einer Bewegung der Laderückwand im Stillstand des Flugzeugs bei bereits entsprechend teilweise gefülltem Laderaum.

In jedem Falle ist es schwierig und gefahrengeneigt, die zumal im Hinblick auf die ungünstigen Reibungsbedingungen äußerst großen Antriebskrafte des Transportorgans im Skelett des Flugzeugrumpfes abzufangen, da dieses eine diffizile Leichtbaukonstruktion darstellt, die bereits von den Erfordernissen des Flugbetriebes her trotz leichtestmöglicher Bauweise erheblichen Belastungen ausgesetzt ist, so daß im Vergleich zu den üblichen Belastungsarten untypische Belastungsspitzen zu Schäden mit weitreichenden Folgen führen können. Auch bei anderen Fahrzeugen wie Schiffen oder Randfahrzeugen ist eine Einleitung zusätzlicher hoher Spannungsspitzen in die tragende Konstruktion vielleicht weniger gefahrengeneigt, in jedem Falle aber höchst unerwünscht.

Demgegenüber liegt der Erfindung die Aufgabe zugrunde, eine Einrichtung der im Oberbegriff des Anspruchs 1 angegebenen Gattung zu schaffen, bei der die Höhe der erforderlichen Antriebskräfte begrenzt und zugleich deren Einleitung in die tragende Konstruktion des Flugzeugs oder dergl. zumindest vermindert, wenn nicht ganz vermieden ist.

Die Lösung dieser Aufgabe erfolgt durch die kennzeichnenden Merkmale des Anspruchs 1.

Dadurch, daß der motorische Antrieb für das Transportorgan im Bereich des hinteren Endes des Laderaums angeordnet ist, stört er im Nutzraum des Laderaums nicht und erlaubt eine konstruktiv einfache Einbringung der Antriebskräfte Ober die dortigen Rollen oder Walzen für die zugfesten flexiblen Zugelemente wie Bänder. Die Laderückwand selbst braucht nicht in den Antriebszug eingeschaltet zu sein. Dadurch, daß im Bereich der Beschickungsöffnung lediglich eine Umlenkung an Umlenkrollen erfolgt, die an einem Führungsprofil zwischen den oberen und unteren Teilen der Transportunterlage angeordnet sind, kann ein Antrieb der hinteren Rollen sowohl für die Belade- als auch für die Entladebewegung verwendet werden. Dadurch, daß das Führungsprofil seinerseits über eine Gleitplatte gegen den hinteren Antrieb abgestützt ist, wird nicht nur ein unmittelbares Aufeinandergleiten der oberen und unteren Teile der Transportunterlage unter Last vermieden und ein reibungsarmes Gleiten der mit dem Ladegut belasteten Transportunterlage gewährleistet, sondern insbesondere auch eine Belastung der tragenden Wandteile des Laderaums durch Antriebskräfte vermieden; denn in beiden Antriebsrichtungen werden die Antriebskräfte am vorderen Führungsprofil abgestützt, und über die Gleitplatte zum Antrieb zurückgeleitet. Die gesamte Ladeeinrichtung arbeitet - abgesehen von ihrer grundsätzlichen lagesichernden Befestigung an der tragenden Konstruktion des Laderaums - somit gewissermaßen autark, da durch den Antrieb erzeugte Kräfte zumindest zum Teil, bei Bedarf auch vollständig auch wieder in der Ladeeinrichtung abgefangen und nicht auf die äußere Konstruktion übergeleitet werden. Dadurch wird die tragende Konstruktion des Laderaums von jeglichen Belastungsspitzen entlastet. Da die zugfesten flexiblen Zugelemente etwa in Form von Bändern über die gesamte Breite des Laderaumbodens verteilt angeordnet und an Umlenkrollen des ebenfalls der Form des Laderaums anpaßbaren Führungsprofils umgelenkt werden können, kann trotz unebener Ausbildung des Laderaumbodens und damit der Transportunterlage mit einer von Seite zu Seite einteilig durchgehenden Transportunterlage gearbeitet werden, wobei die zwischen den Bändern angeordneten Teile der teppichartigen Transportunterlage aus flexiblem Textilmaterial durch die zugbelasteten Zugelemente wie Bänder vor einer Einleitung übergroßer Zugspannunge geschützt sind. Die Bänder oder dergl. können bei einer Aufwicklung, Umlenkung usw. wie separate Bänder gehandhabt werden, ohne daß zwischen den Bändern vorhandenes Material stören würde. Die hinteren Rollen, an denen die Bänder aufgewickelt oder umgelenkt sind, können konstruktiv freizügig ausgebildet werden, da an jenen stets nur die Bänder ohne dazwischenliegendes Textilmaterial gehandhabt werden, da die Transportunterlage zwischen den Bändern oder dergl. in keiner Betriebsstellung in den Bereich der hinteren Rollen gelangt.

Die Anzahl der Bänder bestimmt sich nach den zu übertragenden Zugkräften, die bei einer Forderung eines Transportes einer Last von. z.B. 600 kg auf einem laufenden Meter Laderaumfläche sehr erheblich sein können. Die Anordnung der Bänder erfolgt daher im Prinzip zunächst in gleichmäßiger Verteilung über die Breite des Transportorgans, derart, daß das zwischen den Bändern vorliegende Textilmaterial beim Ziehen von Stückgut, welches zwischen den Bändern aufliegt, nicht über Gebühr beansprucht wird. Die Bänder bestehen zweckmäßig aus einem unelastischen Textilmaterial wie Kevlar; Kevlar ist ein eingetragenes Warenzeichen der Firma Dupont und bezeichnet Aramid-Fasern (Poly (1,4-Phenylenterephthalamid)) mit extrem hohem Dehnungswiderstand, großer Festigkeit und Biegsamkeit. Eine unelastische Ausbildung der Bänder vermeidet bei Zugbelastung zum Transport von Gut eine vorherige merkliche Dehnung, die dann beim übergang von der Haftreibung zur Gleitreibung zwischen der Transportunterlage und der Gleitplatte zu einer ruckartigen Beschleunigung des Gutes führen würde. Durch die unelastische Ausbildung wird vielmehr jede Antriebsbewegung praktisch verzögerungsfrei in eine entsprechende Folgebewegung der Transportunterlage mit dem daraufliegenden Stückgut umgesetzt.

Die Bänder können mit ihren Vorderenden einerseits und ihren Hinterenden andererseits je auf eigenen Rollen aufgewickelt werden, so daß jedes Bandende von der zugehörigen Rolle problemlos gelöst und das Transportorgan so de- und remontiert werden kann. Bei unter den auftretenden Belastungen praktisch unelastischen Bändern auf je einer Aufwickel- und einer Abwickelrolle ergibt sich jedoch das Problem, daß bei synchronem Lauf der Aufwickel- und Abwickelrollen infolge der unterschiedlichen Rollendurchmesser unterschiedliche Bandlängen freigesetzt werden, die durch schlaffe Bandabschnitte in Zugrichtung gesehen vor der Transportunterlage möglicherweise zu Betriebstörungen Anlaß geben könnten und somit aufwendige Kompensationsmaßnahmen erfordern.

Aus der US-A-3,876,089 ist es bereits bekannt, bei einem Förderboden für ein Fahrzeug die Zugelemente des Förderers im Bereich der Entladeöffnung umzulenken und am gegenüberliegenden Ende den Antrieb für die dortigen Umlenkrollen vorzusehen. Hier handelt sich um eine Entladevorrichtung eines LKW-Anhängers hauptsächlich für den Transport von Schüttgut, deren Förderer als Förderboden mit aneinanderstoßenden oder schuppenartig überlappenden starren Bodenleisten den Pritschenboden bildet und das Schüttgut über die hintere Umlenkzone abwirft.

Daher ist gemäß Anspruch 2 bevorzugt, daß die Bänder jedenfalls in funktioneller Hinsicht als Endlosbänder ausgebildet sind, die über die Rollen an dem der Beschickungsöffnung gegenüberliegenden Ende des Laderaums umgelenkt sind. In einem solchen Fall ergibt sich kein Problem mit Längenänderungen durch auf- und abwickelnde Rollen. Dann kann auf Kompensationsmaßnahmen verzichtet werden und genügt es, bei Bedarf ein Federelement wie eine Federrolle mit kurzem Federweg zur Sicherstellung einer gewünschten Minimalspannung zu verwenden. In diesem Falle ist aber dafür Sorge zu tragen, daß der Antrieb der Bänder an den Rollen mit allenfalls minimalem Schlupf, am besten ohne jeden Schlupf, erfolgt, so daß die Rolle und das Band gemäß Anspruch 3 Formschlußmitnahmemittel aufweisen sollten. Hierzu kann beispielsweise die Rolle nach Art einer Stachelwalze mit Vorsprüngen ausgebildet sein, die in entsprechenden Mitnahmeausnehmungen des Bandes eingreifen, oder aber es kann etwa eine Ausbildung des Bandes jedenfalls in dem mit der Rolle in Berührung gelangenden Bereich als Zahnriemen bzw. der Rolle als Zahnrad erfolgen, wie dies an sich bekannt ist. Wie ohne weiteres ersichtlich ist, braucht dabei das Zugelement nicht als Band im engeren Sinne ausgebildet zu sein, sondern kann auch etwa kettenartig oder dergl. ausgebildet sein, sollte jedoch aus Gründen der Gewichtsersparnis aus Kunststoff bestehen.

In besonders bevorzugter Weise ist gemäß Anspruch 4 auf den Bändern im Bereich des hinteren Endes der Transportunterlage eine Laderückwand angeordnet, die mit der Transportunterlage hin- und herbewegt wird. Auf diese Weise erhält der jeweils genutzte Stauraum einen definierten Abschluß, und können im hinteren Bereich des Stauraums liegende Gepäckstücke oder dergl. gegen die Laderückwand sauber abgestützt werden. Beim Entladevorgang gewährleistet die Laderückwand die sichere Mitnahme sämtlicher Transportgüter. Für den Antrieb ist die Laderückwand jedoch nicht erforderlich.

Eine aufwendige und zusätzliche Kräfte in die Bänder einleitende Stützkonstruktion für die aufrechtstehende Laderückwand kann gemäß Anspruch 5 dadurch vermieden werden, daß die Laderückwand über seitliche Auslegerelemente wie Arme oder Wände mit über die Tiefe des Laderaums im Abstand voneinander angeordneten Stützrollen, die an Laufschienen an den Seitenwänden des Laderaums laufen und/oder eine bodenseitige Abstützung gegen ein Kippen nach hinten ergeben, gegen Kippbewegungen gesichert ist. Den Bändern obliegt dann lediglich die Aufgabe der Mitnahme der Laderückwand, während deren aufrechte Stellung unmittelbar über Laufschienen an den Seitenwänden des Laderaums und/oder die bodenseitige Abstützung gewährleistet ist.

Auf halben Wege der Be- oder Entladung gelangen der Vorderabschnitt und der Hinterabschnitt der Transportunterlage in Beschickungsrichtung gesehen hinter dem Führungsprofil in gegenseitige überdeckung. Um Relativbewegungen des Textilmaterials aneinander unter ggf. sehr hohem Druck zu vermeiden, und stattdessen günstige Gleiteigenschaften zu erzeugen, ist gemäß Anspruch 6 vorgesehen, daß die an die Hinterkante des Führungsprofils anschließende Gleitplatte wenigstens etwa über die halbe Tiefe des Laderaums reicht, also über denjenigen Teil, in dem eine gegenseitige Anlage der Abschnitte der Transportunterlage in Frage kommt. Als Material für die Gleitplatte würde sich Blech oder dergl. eignen, jedoch ist aus Gründen der Gewichtsersparnis und der Optimierung der Gleiteigenschaften eine Oberfläche der Gleitplatte aus gleitfähigem Kunststoff wie Polytetrafluorethylen (Teflon®) bevorzugt, wobei die Gleitplatte aus einem druckfesten Material wie etwa Kohlestoffasern mit einer Teflonoberfläche bestehen kann. Die rückwärtige Seite der Gleitplatte stützt sich entweder unmittelbar oder über geeignete Druckstützen am Antrieb ab.

Zur übertragung von Druckkräften zwischen dem Führungsprofil und dem Antrieb stützt die Gleitplatte gemäß Anspruch 7 bevorzugt das Führungsprofil an der der Umlenkkante gegenüberliegenden Seite unmittelbar ab. Dadurch kann der Aufwand für zusätzliche Druckorgane zwischen der Hinterkante des Führungsprofils und der Vorderkante der Gleitplatte entfallen und kann diese im wesentlichen fugenfrei an das Führungsprofil anschließen bzw. auch einheitlich mit diesem ausgebildet sein.

Zur Erzielung der Abstützfunktion kann die Gleitplatte über die gesamte Tiefe des Laderaums reichen und etwa am hinteren Getriebekasten abgestützt werden, ohne daß hierzu eine seitliche Festlegung der Gleitplatte erforderlich ist. In ganz besonders bevorzugter Weise ist die Gleitplatte jedoch gemäß Anspruch 8 an den flugzeugseitigen Profilschienen an den Seitenwänden des Laderaums befestigt, und kann so ihre Abstützfunktion ggf. auch dann ausüben, wenn sie nicht über die gesamte Tiefe des Laderaums reicht bzw. sich nicht anderweitig an ihrer Rückseite abstützt.

Bei gewölbter und insbesondere bei ebener Ausbildung des Führungsprofils, welches zwischen seitlichen Befestigungen keine starre Abstützung zum Boden des Laderaums hin aufweisen kann, erfolgt zwangsläufig eine mehr oder weniger starke Durchbiegung bei Druckbelastung von oben, wie sie durch das anzuordnende Stückgut unvermeidlich ist. Um bei solchen Druckbelastungen zu vermeiden, daß der unter dem Führungsprofil laufende Abschnitt der Transportunterlage mit zu starken Druckkräfte eingequetscht wird und daher zusätzliche Kräfte für die Bewegung der Transportunterlage erforderlich werden, ist gemäß Anspruch 9 insbesondere ein rollende Abstützung zwischen dem Führungsprofil und dem Boden des Laderaums bzw. dem darunter laufenden Abschnitt der Transportunterlage vorgesehen. Dabei können entsprechende Rollen an der Unterseite des Führungsprofils oder an der Oberseite des Bodens des Laderaums, oder an beiden Seiten vorgesehen werden, um bei Druckbelastung keine großen Haltekräfte in die Transportunterlage einzuleiten. Weiter kann die Gleitfähigkeit der Transportunterlage unter Druck auf der Oberseite des Führungsprofils durch Abstützung der Bänder auf der Oberseite des Führungsprofils an derartigen Rollen verbessert werden. Wesentlich ist, daß sämtliche Stützrollen in denjenigen Bereichen, über die Breite des Führungsprofils gesehen, angeordnet werden sollten, in denen die Bänder laufen, um nicht zusätzliche Zugkräfte in das Textilmaterial zwischen den Bändern einzuleiten. Die jeweiligen Rollen brauchen keineswegs ständig Abstützkräfte aufzunehmen, sondern können erst nach einer entsprechenden zulässigen Durchbiegung des Führungsprofils in Abstützposition gelangen.

Gemäß Anspruch 10 sollten derartige bodenseitige Stützrollen jedenfalls nahe, also relativ kurz hinter der Umlenkkante angeordnet werden, da hier zusätzlich zu Durchbiegungen aufgrund von Gewichtsbelastung auch eine maximale Durchbiegung zum Boden des Laderaums hin aufgrund von Torsionskräften auftritt, die insbesondere zu Beginn eines Entladevorganges dadurch erzeugt werden, daß die zur Bewegung des gesamten Ladegutes erforderlichen Zugkräfte an der Umlenkkante umgelenkt werden müssen. Dies hat einen Effekt zur Folge, wie er auch bei selbstverstärkenden Quetschverschlüssen auftritt, bei denen erhöhter Zug eine entsprechende erhöhte Quetsch- oder Einspannkraft zur Folge hat. Daher sollte vor allem im Vorderteil bevorzugt dafür gesorgt werden, daß ein Einquetschen der Transporunterlage durch deren Druckbeaufschlagung über Stützrollen auch unter extrem ungünstigen Belastungen vermieden wird.

Die Konzentration der Zugkräfte auf die Bänder gestattet weiterhin, gemäß Anspruch 11 lediglich im Bereich der Bänder Stützrollen nahe der Umlenkkante des Führungsprofils anzuordnen, um die Bänder bei der dortigen Umlenkung rollend abzustützen. Hierdurch wird die Reibung des unter Druck um die Umlenkkante des Führungsprofils herumgezogene Materials drastisch vermindert. In den Bereichen zwischen den Bändern liegt das Textilmaterial mehr oder weniger lose an der gerundeten Oberfläche der Umlenkkante an, wobei keine wesentlichen Reibungskräfte auftreten, da der Zug auf den Bereich der Bänder konzentriert ist.

Jegliche Gefahr einer Verschmutzung des Raums unterhalb der Transportunterlage sowie des Eindringens von Fremdkörpern wird gemäß Anspruch 12 dadurch vermieden, daß im Bereich der Umlenkkante eine Abdichteinrichtung in enger Nachbarschaft unter Berührung mit der Transportunterlage angeordnet ist, so daß auch dieser Randbereich gegen ein Eindringen von Fremdkörpern und Schmutz gesichert ist. Die Abdichteinrichtung ist bevorzugt als Bürstenanord-n ung ausgebildet, die beim Lauf der Transportunterlage einen entsprechenden Selbstreinigungseffekt ergibt. Durch eine unterhalb der Bürstenanordnung angeordnete Schmutzfangwanne kann anfallender Schmutz periodisch leicht entfernt werden.

Gemäß Anspruch 13 sind die Rollen zum Umlenken der antriebsseitigen Enden der Bänder bei gewölbter Ausbildung des Bodens des Laderaums bzw. der Transportunterlage auf nebeneinanderliegenden, gegeneinander geneigt angeordneten Wellen befestigt, die beispielsweise über Kardangelenke miteinander verbunden sein können. Auf diese Weise läßt sich eine hintere Umlenkung der Bänder unter gleichzeitiger Aufbringung der Antriebskräfte am problemlosesten erzielen.

Weitere Einzelheiten, Merkmale und Vorteile der Erfindung ergeben sich aus der nachfolgenden Beschreibung von Ausführungsbeispielen anhand der Zeichnung.

Es zeigt
- Fig. 1: eine perspektivische Darstellung des Innenraums des Unterteiles eines Flugzeugrumpfes mit einer erfindungsgemäßen Einrichtung,
- Fig. 2: einen seitlichen Halteabschnitt einer Halteschiene für das Führungsprofil,
- Fig. 3: in einer Fig. 2 entsprechenden Darstellung einen Schnitt gemäß Linie III-III in Fig. 4,
- Fig. 4: einen Schnitt gemäß Linie IV-IV in Fig. 3,
- Fig. 5: eine Ansicht alleine der Halteplatte aus Richtung des Pfeiles V in Fig. 4,
- Fig. 6: einen Schnitt gemäß Linie VI-VI in Fig. 7 in einer gegenüber Fig. 7 vergrößerten Darstellung,
- Fig. 7: eine Ansicht aus Richtung des Pfeiles VII in Fig. 6 mit zur Verbesserung der übersichtlichkeit teilweise weggerissener Transportunterlage,
- Fig. 8: in vergrößerter Darstellung einen Schnitt gemäß Linie VIII-VIII in Fig. 1,
- Fig. 9: in einer Fig. 8 entsprechenden Darstellung eine abgewandelte Ausführungsform der Erfindung,
- Fig. 10: einen entsprechend der Verlängerung der Linie VIII-VIII in Fig. 1 geführten Schnitt durch den Bereich der Laderückwand,
- Fig. 11: die Einzelheit aus Kreis XI in Fig. 10 in vergrößerter Darstellung, jedoch ohne Transportunterlage,
- Fig. 12: eine Ansicht aus Richtung des Pfeiles XII in Fig. 11,
- Fig. 13: schematische vereinfacht einen Schnitt durch den Unterteil des Flugzeugrumpfes in Höhe einer Laderückwand des Transportorgans,
- Fig. 14: die Einzelheit aus Kreis XIV in Fig. 13,
- Fig. 15: in vergrößerter Darstellung einen Schnitt gemäß Linie XV-XV in Fig. 13,
- Fig. 16: eine Schnittdarstellung entsprechend Fig. 13, jedoch durch den Bereich des hinteren Endes des Laderaumes zur Veranschaulichung des Antriebs,
- Fig. 17: in einer vergrößerten Darstellung einen Schnitt gemäß Linie XVII-XVII in Fig. 16,
- Fig. 18: die Einzelheit aus Kreis XVIII in Fig. 16 in vergrößerter Darstellung, und
- Fig. 19: einen Längsschnitt entsprechend Linie VI-VI in Fig. 7 durch eine abgewandelte Ausführungsform der Erfindung.

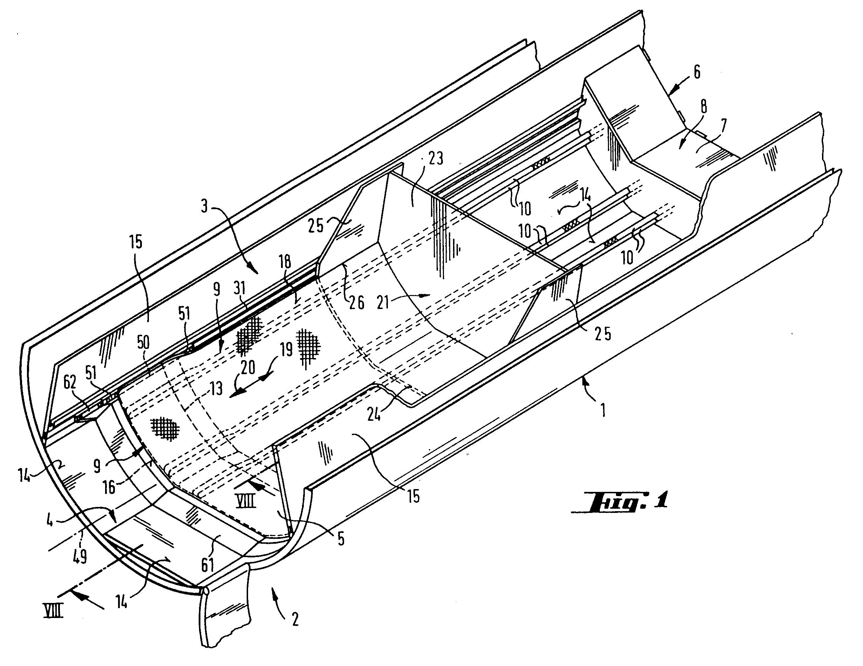

In der Zeichnung ist mit 1 ein Flugzeugrumpf bezeichnet, von dem in Fig. 1 lediglich der untere Teil sichtbar ist, und der eine seitlich untere Ladeluke 2 aufweist, durch welche hindurch ein insgesamt mit 3 bezeichneter Laderaum zugänglich ist.

Der Laderaum 3, der im Beispielsfalle für die Aufnahme des Fluggastgepäckes eines kleineren Passagierflugzeuges bestimmt sein möge, weist anschließend an einen im Bereich der Ladeluke 2 angeordneten Arbeitsbereich 4 eine Beschickungsöffnung 5 auf, die im Beispielsfalle durch den an den Arbeitsbereich 4 anschließenden Eingangsquerschnitt des Laderaums 3 gebildet ist, und ein der Beschickungsöffnung 5 gegenüberliegendes Ende 6, welches in nicht mehr näher dargestellter Weise durch eine Schottwand abgeschlossen ist und in dessen Bereich ein in einem Gehäuse 7 angeordneter Antrieb 8 angeordnet ist. Der Antrieb 8 dient zur Erzeugung einer hin- und hergehenden Bewegung eines Transportorganes 9, welches dazu dient, im Bereich der Beschickungsöffnung 5 aufgegebenes Ladegut von der Beschickungsöffnung 5 weg schrittweise intermittierend in Richtung auf das gegenüberliegende Ende 6 des Laderaums 3 zu bewegen, um so eine vollständige Beladung des niedrigen und tiefen Laderaumes 3 vom Arbeitsbereich 4 aus zu ermöglichen, ohne daß das Bedienungspersonal den Arbeitsbereich 4 verlassen muß.

Wie insbesondere aus einer Zusammenschau der Fig. 1 sowie 6 und 7 ersichtlich ist, weist das Transportorgan zugfeste Bänder 10 auf, die im Bereich des Antriebs 8 um Rollen 11 gewickelt sind, welche in Fig. 16 und 17 näher dargestellte sind. Die Bänder 10 sind im Bereich der Beschickungsöffnung 5 an einem dünnen Führungsprofil 13, das nur eine sehr geringe Höhe von dem Beispielsfalle 30 mm besitzt, knapp über dem mit 14 bezeichneten Boden des Laderaums 3 umgelenkt. Das starr im Bereich von Seitenwänden 15 des Laderaums 3 in weiter unten noch näher erläuterter Weise befestigte Führungsprofil 13 sichert mit einer vorderen Umlenkkante 16 ein weiches Umlenken der Bänder 10 auf engem Raum und definiert somit den Abstand zwischen der Umlenkung der Bänder 10 und dem Antrieb 8.

Auf diese Weise können die Bänder 10 durch entsprechenden Antrieb der Rollen 11 über die Umlenkkante 16 des Führungsprofils 13 hin- und hergezogen werden, so daß sich eine entsprechende Transportbewegung in den Laderaum 3 hinein oder aus ihm heraus ergibt.

Um bei dieser Transportbewegung eine Mitnahme von Ladegut wie Gepäckstücken zu gewährleisten, ist der Zwischenraum zwischen dem Bändern 10 in dem Bereich, in dem Ladegut liegen kann, mit einer teppichartigen Transportunterlage 18 aus flexiblem Textilmaterial überbrückt. Zur besseren Veranschaulichung ist die teppichartige Transportunterlage 18 in weiteren Darstellungen zuweilen als relativ dick auf den Bändern 10 aufliegend dargestellt, jedoch ist darauf hinzuweisen, daß tatsächlich die Transportunterlage 18 aus einem einlagigen Nylongewebe bestehen kann, welches im überdeckungsbereich mit den Bändern 10 vernäht ist und somit kaum aufträgt.

In Fig. 1 ist eine Zwischenstellung beim Be- oder Entladevorgang dargestellt, wobei Pfeil 19 die Beschickungsrichtung und Pfeil 20 die Entladerichtung veranschaulicht. Das in Beschickungsrichtung 19 vordere Ende 21 der Transportunterlage 18 liegt dabei in einem mittleren Bereich zwischen dem Führungsprofil 13 und dem Antrieb 8 auf der Oberseite des Transportorganes 9, während das in Beschickungsrichtung gemäß Pfeil 19 hintere Ende der Transportunterlage 18 an der Unterseite des Transportorganes 9 liegt und bei weiterer Bewegung des Transportorganes in Beschickungsrichtung gemäß Pfeil 19 von unten her an das Führungsprofil 13 angenähert wird. In der vollen Ladestellung kann das hintere Ende der Transportunterlage 18 im Bereich der Umlenkkante 16 des Führungsprofils 13 liegen, während das Ende 21 knapp vor dem Gehäuse 7 des Antriebs 8 zu liegen kommt, so daß die Transportunterlage 18 die gesamte nutzbare Tiefe des Laderaums 3 bedeckt. In der vollen Entladestellung hingegen liegt das Ende 21 in Reichweite vom Arbeitsbereich 4 aus hinter der Beschickungsöffnung 5 und das hintere Ende im Abstand vor dem Gehäuse 7 des Antriebs 8. Dadurch ist sichergestellt, daß der Antrieb 8 in jedem Falle lediglich die Bänder 10 wickelt, niemals aber versucht werden muß, den Bereich der Transportunterlage 18 zu wickeln.

Im Bereich des Endes 21 der Transportunterlage 18 ist eine Laderückwand 23 vorgesehen, welche die jeweils genützte Ladefläche auf der Transportunterlage 18 an der der Beschickungsöffnung 5 gegenüberliegenden Seite begrenzt. Damit kann Ladegut an der Laderückwand 23 aufgeschichtet werden, ohne daß die Gefahr besteht, daß es in Richtung auf den Antrieb 8 von der Transportunterlage 18 herunterfällt. Die Laderückwand 23 ist, wie weiter unten anhand der Fig. 10 bis 12 noch näher erläutert wird, an den Bändern 10 unmittelbar befestigt, und wird so mit den Bändern 10 hin- und hergezogen. An die Laderückwand 23 schließt eine Bodenwand 24 an, die an den Bändern 10 befestigt ist, sowie seitliche Auslegerelemente 25, die als Seitenwangen ausgebildet sind. Wenn, wie im Beispielsfalle, die Transportunterlage 18 über die Bodenwand 24 bis zur aufrechten Laderückwand 23 hin gezogen ist, so kann sie durch seitliche Schlitze 26 zwischen der Bodenwand 24 und den wangenförmigen Auslegerelementen 25 hindurchtreten, um in weiter unten noch näher erläuterter Weise im Bereich der Seitenwände 15 des Laderaums 3 gehalten zu werden, oder aber ist eine eigene Befestigung der dortigen Ränder der Transportunterlage 18 an der Bodenwand 24 oder den wangenförmigen Auslegerelementen 25 vorgesehen.

Durch die vorstehend in ihrer prinzipiellen Wirkungsweise und in ihrem prinzipiellen Aufbau erläuterte Ausbildung des Transportorganes 9 ist gewährleistet, daß durch die Transportmaßnahmen minimaler Nutzraum des Laderaums 3 verlorengeht, und dennoch das Ladegut vom Arbeitsbereich 4 aus noch im Bereich der Beschickungsöffnung 5 auf das Transportorgan 9 aufgegeben und in Schritten jeder gewünschten Länge in den Laderraum 3 hineintransportiert wird; ebenso kann beim Entladen ein schrittweises Vorwärtstakten des Transportorganes 9 erfolgen, um die zu entladenden Stücke jeweils optimal in den Greifbereich des Bedienungspersonals zu bringen. Dadurch, daß im Bereich des Antriebs 8 ausschließlich Bänder 10 gehandhabt werden müssen, führt auch eine gewölbte Ausbildung des Bodens 14 des Laderaums 3 und damit des Transportorganes 9 zu keinen Schwierigkeiten, ebenso wie die Umlenkung gespannter Bänder 10 an der Umlenkkante 16 des Führungsprofils 13 ohne weiteres eine gewölbte Ausbildung des Führungsprofils 13 gestattet, wie dies aus Fig. 1 ersichtlich ist, ohne daß die ohne eigene Spannungen die Bänder 10 überbrückende Transportunterlage 18 irgendwelche Schwierigkeiten insoweit ergibt.

Dennoch führen insbesondere im Laderaum 3 eines Flugzeugs die örtlichen Gegebenheiten zu einer Reihe von Problemstellungen vor allem in Zusammenhang mit der Lagesicherung des Führungsprofils 13, der Führung der Seitenränder der teppichartigen Transportunterlage 18 sowie einer Führung des oberen Bereiches der Laderückwand 23, deren erfindungsgemäße Lösungen nachstehend im einzelnen erläutert werden.

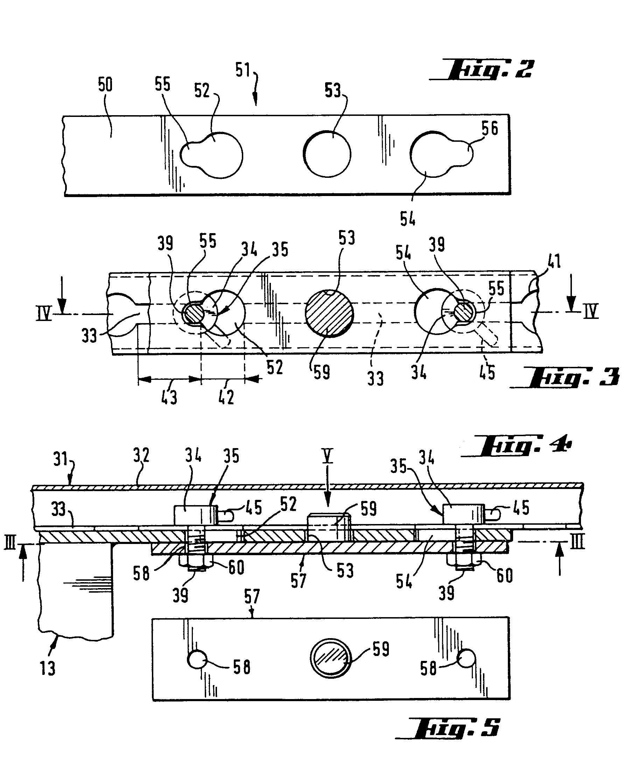

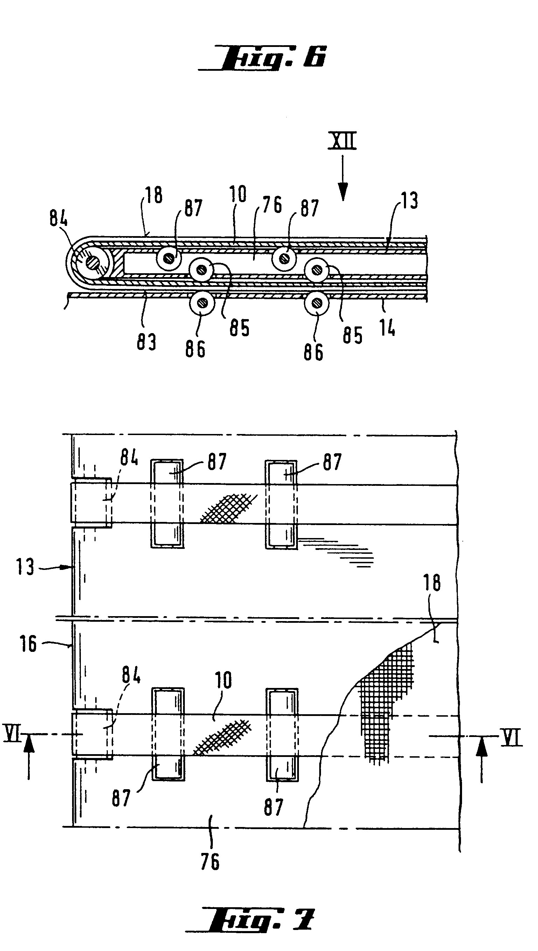

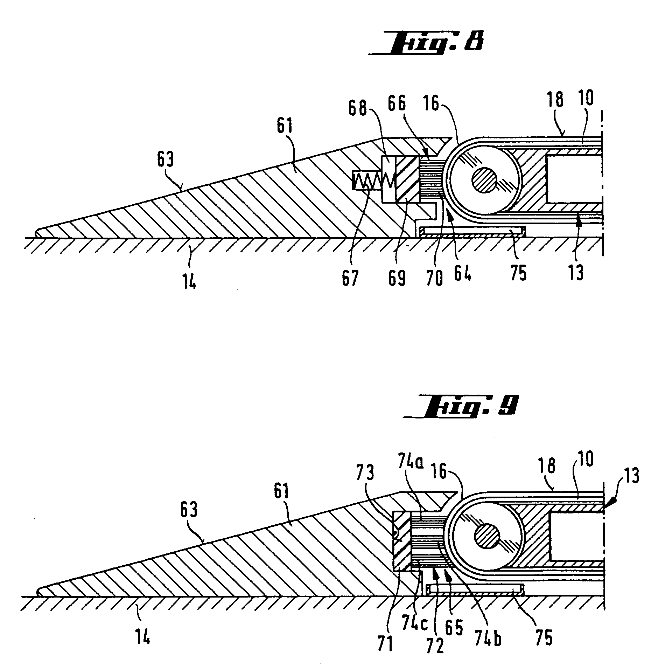

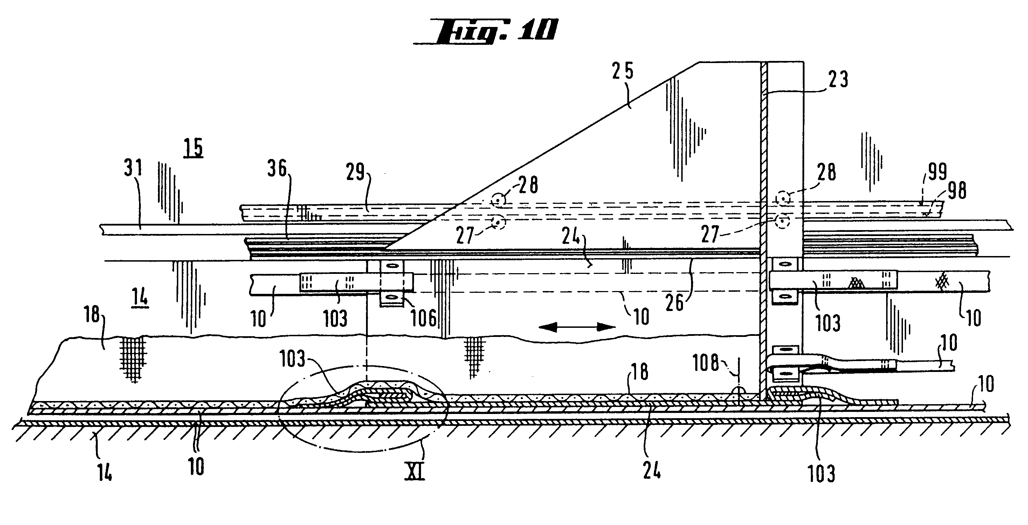

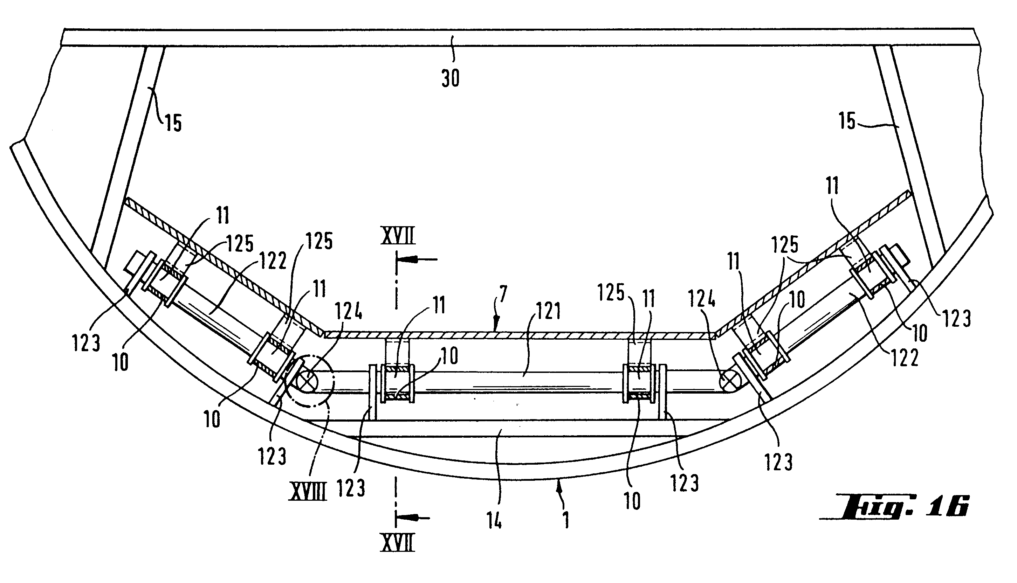

Wie auch aus der Darstellung in Fig. 13 im einzelnen ersichtlich ist, ist in jede Seitenwand 15 eine Profilschiene 31 eingelassen, die (vgl. Fig. 3 und 4) ein Kastenprofil 32 mit einem Einführungsschlitz 33 aufweist, welcher von einem Bolzenkopf 34 eines Haltebolzens 35 hintergriffen werden kann. Eine derartige Profilschiene 31, deren Ausbildung und Wirkungsweise weiter unten noch näher erläutert wird, ist im Seitenbereich von Flugzeugladeräumen üblich, um sogenannte Locker an gewünschten Stellen zu befestigen, an denen Stückgut bei Bedarf durch Verzurrung lagegesichert werden kann. Daher stellt die Profilschiene 31 eine Verankerungsmöglichkeit hoher Belastbarkeit dar.

Aus Fig. 1 ist die Anordnung des Führungsprofils 13 zwischen den Seitenwänden 15 des Laderaums 3 ersichtlich, wobei im Bereich des Führungsprofils 13 die Transportunterlage 18 nicht dargestellt ist. Wie aus der Darstellung in Fig. 1 anhand der Verteilung der Bänder 10 schematisch ersichtlich ist, sind die Bänder 10 im wesentlichen symmetrisch zur Längsmittelebene 49 des Transportorganes 9 angeordnet, liegen jedoch möglichst weit gegenüber der Längsmittelebene 49 nach außen versetzt. Hierdurch wird das bei gegebener Zugkraft der Bänder 10 in das Führungsprofil 13 eingeleitete Biegemoment durch Minimierung des Hebelarmes minimiert. Dennoch ist eine außerordentlich stabile Befestigung des Führungsprofils 13 an den Seitenwänden 15 erforderlich, um die auftretenden hohen Zugkräfte und Biegemomente sauber aufzunehmen.

Wie auch aus Fig. 2 bis 5 insoweit zu entnehmen ist, ist das Führungsprofil 13 zu beiden Seiten mit je einer Halteschiene 50 versehen, die zwei in großem Abstand voneinander liegende Halteabschnitte 51 aufweist, mit denen eine Befestigung an der Profilschiene 31 erfolgt. Der gegenseitige Abstand der Halteabschnitte 51 ist deshalb von Bedeutung, weil bei entsprechend großem Abstand von beispielsweise mehr als 20 englischen Zoll nicht mehr von einer gegenseitigen Beeinflussung der Halteabschnitte 51 ausgegangen wird, und jeder Halteabschnitt 51 dann die volle zulässige Kraft in die Profilschiene 31 einleiten kann.

Wie aus Fig. 2 im einzelnen ersichtlich ist, weist jeder Halteabschnitt 51 eine Mehrzahl von im Beispielsfalle drei Ausnehmungen 52, 53 und 54 auf. Während die mittlere Ausnehmung 53 kreisrunde Form hat, sind die äußeren Ausnehmungen 52 und 54 mit je nach außen liegenden Ausbuchtungen 55 und 56 versehen. Wie aus der Darstellung in den Fig. 3 und 4 ersichtlich ist, fluchten die Ausnehmungen 52, 53 und 54 mit entsprechenden Einbuchtungen 41 bzw. Durchtrittszonen 42 der Profilschiene 31, so daß bei auf die Profilschiene 31 gelegtem Halteabschnitt 51 die Bolzenköpfe 34 von Haltebolzen 35 sowohl die Ausnehmung 52 und 54 als auch die Einbuchtungen 41 bzw. Durchtrittszonen 42 des Einführungsschlitzes 33 der Profilschiene 31 durchtreten können. Von dieser Position aus können die Haltebolzen 35 seitlich nach außen verschoben werden, so daß die Bolzenköpfe 34 in die benachbarte Haltezone 43 der Profilschiene 31 eintreten und dabei die Bolzenschäfte 39 in den Bereich der Ausbuchtung 55 bzw. 56 gelangen, in denen sie ggf. mit Spiel aufgenommen werden können.

In dieser Stellung wird eine Halteplatte 57 über den Halteabschnitt 51 gesetzt, die in einem solchen Abstand voneinander liegende Durchtrittsöffnungen 58 für die Bolzenschäfte 39 aufweist, daß die Bolzenschäfte 39 bei Durchtritt durch die Durchtrittsöffnungen 58 in einem gegenseitigen Abstand entsprechend dem Abstand der Ausbuchtungen 55 und 56 lagegesichert werden, und somit die Haltebolzen 35 nicht mehr zurück in den Bereich der Durchtrittszonen 42 des Einführungsschlitzes 33 gelangen können. Die Halteplatte 57 weist weiterhin einen mittigen Zapfen 59 auf, der im wesentlichen spielfrei durch die öffnung 53 des Halteabschnittes 51 und die dahinterliegende Durchtrittszone 42 des Einführungsschlitzes 33 der Profilschiene 31 tritt, wenn die Halteplatte 57 zusammen mit dem Halteabschnitt 51 durch Haltemuttern 60 an den Haltebolzen 35 befestigt wird. Ein Fortsatz 45 in geeigneter Dimensionierung am Bolzenkopf 34 dient durch entsprechenden Anschlag an der Innenseite des Kastenprofils 32 zur Verdrehsicherung, so daß beim Aufschrauben der Haltemutter 60 keine Drehbewegung des Bolzenkopfes 34 erfolgen kann. Auf diese Weise sichert der im wesentlichen spielfreie Sitz des Zapfens 59 in der Ausnehmung 53 und der Durchtrittszone 42 die Lage der Halteplatte 57 und insbesondere des Halteabschnitts 51 in Längsrichtung der Profilschiene 31, während die Haltemuttern 60 die Haltekraft an der Profilschiene 31 ergeben. Auf diese Weise sind die beiden im großen Abstand voneinander liegenden Halteabschnitte 51 an jeder Seite des Führungsprofils 13 sicher an der Profilschiene 31 befestigt, und ist so das Führungsprofil 13 gegen die Zugkräfte von den Bändern 10 her gelagert.

In analoger Weise ist, wie Fig. 1 zeigt, in Beschickungsrichtung gemäß Pfeil 19 gesehen vor dem Führungsprofil 13 eine Rampe 61 mit seitlichen Halteabschnitten 62 an der Profilschiene 31 gelagert. Wie insoweit aus den Fig. 8 und 9 ersichtlich ist, dient die Rampe 61 zur Bildung einer Auflaufschräge 63 zur Oberseite des Führungsprofils 13 hin, um den Bereich von dessen Umlenkkante 16 vor Beschädigungen zu sichern und ein Aufschieben von Ladegut auf das Transportorgan 9 im Bereich der Beschickungsöffnung 5 zu ermöglichen.

Wie insoweit aus den Fig. 8 und 9 weiter ersichtlich ist, ist an der Rampe 61 eine Abdichteinrichtung 64 bzw. in alternativer Ausbildung eine Abdichteinrichtung 65 gelagert, mit der ein Eindringen von Verschmutzung und Fremdkörpern in den Bereich unter das Führungsprofil 13 vermieden werden soll.

Im Beispielsfalle der Fig. 8 ist die Abdichteinrichtung 64 als Bürstenanordnung 66 ausgebildet, die einen durch Federn 67 in einer Ausnehmung 68 der Rampe angeordneten Lagerteil 69 aufweist, der Borsten 70 an die an der Umlenkkante 16 umgelenkte Transportunterlage 18 andrückt. Im Falle der Ausführungsform gemäß Fig. 9 sind an einem Lagerteil 71 einer Bürstenanordnung 72 in einer Ausnehmung 73 der Rampe 61 drei Borstenreihen 74a, 74b und 74c gelagert, die unterschiedliche Steifheit besitzen können und so selektiv gegen Verschmutzungen und Fremdkörper wirksam sind. An der Unterseite der Bürstenanordnungen 66 bzw. 72 ist eine Schmutzfangwanne 75 angeordnet, die durch die Bürstenanordnung 66 bzw. 72 hindurchtretenden feinen Schmutz aufnimmt und dessen einfache Beseitung gestattet.

Eine bevorzugte Ausführungsform des Bereichs des Führungsprofils 13 ist in den Fig. 6 und 7 näher veranschaulicht. Danach weist das Führungsprofil 13 einen Hauptkörper 76 auf.

Da das Führungsprofil 13 zwischen den seitlichen Halteschienen 50 frei hängend gelagert ist und dabei einen konstruktiven Spalt 83 zum Boden 14, des Laderaumes 3 hin für den Durchtritt der Bänder 10 und der Transportunterlage 18 freiläßt, sind angesichts der hohen Zugkräfte auf den Bändern 10 Auslenkungen auch des Hauptkörpers 76 des Führungsprofils 13 zu erwarten. Insbesondere zu Beginn des Entladevorganges ziehen die Bänder 10 um die Umlenkkante 16 herum nach unten, so daß der Spalt 83 geschlossen werden könnte und die Bänder 10 mit der Transportunterlage 18 zwischen dem Boden 14 und der Unterseite des Hauptkörpers 76 insbesondere in der Nähe von dessen Umlenkkante 16 eingequetscht werden könnten, so daß die Transportbewegung nachhaltig behindert werden könnte.

Um dem entgegenzuwirken, sind im Bereich der Bänder 10 an der Umlenkkante 16 Umlenkrollen 84 vorgesehen, die im wesentlichen mit der Kontur der Umlenkkante 16 fluchten oder nur geringfügig darüber hinausstehen. Die Umlenkrollen 84, die auf den Bereich der Bänder 10 beschränkt sind, vermindern die Reibung der Bänder 10 bei der Umlenkung um die Umlenkkante 16 und damit in das Führungsprofil eingeleitete Kipp- oder Nickmomente.

Eine weitere Sicherung gegen ein solches Einklemmen ergibt sich dadurch, daß an der Unterseite des Hauptkörpers 76 des Führungsprofils 13 im Bereich der Bänder 10 Stützrollen 85 angeordnet sind, die geringfügig über die Unterseite des Hauptkörpers 76 vorstehen. Im Falle einer Absenkung des Hauptkörpers 76 des Führungsprofils 13 in Richtung auf den Boden 14 des Laderaums 3 erfolgt somit die Abstützung über die Stützrollen 85 und damit die Aufrechterhaltung der Beweglichkeit der Bänder 10. Bodenseitige Reibung kann weiter dadurch minimiert werden, daß den Stützrollen 85 gegenüberliegend im Boden 14 Stützrollen 86 angeordnet sind, auf denen sich im erläuterten Fall die Stützrollen 85 unter Zwischenschaltung der Bänder 10 bzw. der Transportunterlage 18 abstützen, so daß beidseits Rollreibung vorliegt. Im Hinblick auf die besonders kritischen Verhältnisse zu Beginn der Entladephase sollte eine vordere Stützrolle 85 bzw. 86 oder ein Rollenpaar 85/86 möglichst nahe an der Umlenkkante 16 angeordnet werden, um eine Durchbiegung des vor den Stützrollen 85 bzw. 86 liegenden Teil des Hauptkörpers unter den auftretenden Kräften in einem gewünschten Rahmen zu halten.

Eine Erleichterung der Bewegung der Bänder 10 auch auf der Oberseite des Hauptkörpers 76 des Führungsprofils 13 kann durch Stützrollen 87 bewirkt werden, die im Bereich der Bänder auf der Oberseite des Führungsprofils 13 angeordnet sind und dort Rollreibung ermöglichen. Dadurch wird ein Transport insbesondere von schwerem Gut weiter erleichtert.

Wie aus Fig. 1 ersichtlich ist, würden die Bänder 10 bzw. die Transportunterlage 18 mit daraufliegenden Lasten nach Beginn des Beschickungsvorganges in gegenseitige Anlage gelangen, worauf allmählich das hintere Ende weiter nach vorne bis in den Bereich des Führungsprofils 13 gelangt und die gegenseitige Beaufschlagung wieder aufhören würde. Während der über etwa die halbe nutzbare Tiefe des Laderaums 3 reichenden Zone einer möglichen gegenseitigen Anlage der Bänder 10 bzw. der Transportunterlage 18 mit daraufliegendem Gut kann sich erhöhter Verschleiß durch gegenseitige Reibung insbesondere an Nähten ergeben. Um dies zu vermeiden, ist in der aus Fig. 19 ersichtlichen Weise im Anschluß an die Hinterkante 17 des Führungsprofils 13 eine Gleitplatte 96 vorgesehen, die eine gegenseitige Anlage der Bänder 10 und der Transportunterlage 18 in diesem Bereich verhindert. Die Gleitplatte 96, die aus Blech bestehen könnte, im Hinblick auf das Erfordernis der Gewichtsersparnis bei Flugzeugen aber bevorzugt aus Kunststoff besteht, ergibt eine verschleißarme Gleitreibung der Bänder 10 und der Transportunterlage 18. Besonders gute Gleiteigenschaften ergeben sich, wenn die Gleitplatte 96 eine Oberfläche aus Teflon oder einem anderen gleitfähigen Kunststoff aufweist, gegebenenfalls auch ganz aus Teflon gefertigt ist. Es sei darauf hingewiesen, daß bei der Darstellung in Fig. 19 und insbesondere der dort gezeigten Einzelheit die Transportunterlage 18 und die Bänder 10 als starre Elemente dargestellt sind, um eine zeichnerisch übersichtliche Darstellung zu ermöglichen, in der Praxis aber natürlich die Transportunterlage 18 im Bereich zwischen den Bändern 10 satt unter dem Druck der Last an der Gleitplatte 96 anliegt, sowie von den im Beispielsfalle darunterliegenden Bändern 10 in deren Bereich von der Gleitplatte 96 abgedrückt wird.

Selbstverständlich kann die Gleitplatte 96 über eine größere Länge als die halbe nutzbare Tiefe des Laderaums 3 geführt sein. Wie hierzu aus Fig. 19 ergänzend ersichtlich ist, kann die Gleitplatte 96 als Teil des Führungsprofils 13 ausgebildet sein, und unmittelbar dazu beitragen, die Umlenkkante 16 des Führungsprofils 13 zusätzlich etwa gegen das Gehäuse 7 des Antriebs 8 abzustützen. Wenn eine solche Abstützung des Führungsprofils 13 bei kürzerer Gleitplatte 96 angestrebt wird, so kann eine seitliche druckstabile Verankerung der Gleitplatte 96 an den Profilschienen 31 erfolgen, wie dies im Prinzip weiter oben für das Führungsprofil 13 bereits erläutert ist. Hierdurch ergibt sich eine zusätzliche Aussteifung des Führungsprofils 13 sowie bei Bedarf eine Trennung der oben und unten verlaufenden Bänder 10 mit der Transportunterlage 18 über die gesamte Tiefe des Laderaums 3 hinweg. Bei Bedarf können an der Oberseite und/ oder/Unterseite der Gleitplatte 96 bzw. - ähnlich wie dies im Zusammenhang mit den Fig. 6 und 7 erläutert ist - an entsprechender Stelle im Boden 14 des Laderaums 3 Stützrollen 97 im Bereich der Bänder vorgesehen sein, welche die Gleitfähigkeit weiter verbessern. Wesentlich in diesem Zusammenhang ist, daß sämtliche Stützrollen 85, 86, 87 und 97 lediglich im Bereich der Bänder 10 angeordnet sein müssen, da durch die Konzentrierung der Kräfte alleine in den Bändern 10 auch eine entsprechende Abstützung nur dort von besonderer Bedeutung ist.

In den Fig. 10 bis 12 ist eine erste Ausführungsform für die Anordnung und Lagerung der Laderückwand 23 näher veranschaulicht. Wie bereits erläutert, weist die Anordnung neben der aufrechtstehenden Laderückwand 23 eine an dieser befestigte Bodenwand 24 sowie seitliche wangenartige Auslegerelemente 25 auf, zwischen denen und der Bodenwand 24 im Beispielsfalle beidseitig je ein Schlitz 26 für den Durchtritt der Transportunterlage 18 vorgesehen ist.

Eine zusätzliche Führung der Laderückwand 23 in ihrer aufrechten Stellung ergibt sich durch an den Auslegerelementen 25 im Abstand voneinander angeordnete Paar von Stützrollen 27 und 28, die in Laufnuten 98 und 99 der Laufschiene 29 eingreifen und die aufrechte Stellung der Laderückwand 23 sichern. Dabei sind die Rollen 27 und 28 um Achsbolzen drehbar gelagert, die an einer Konsole an der Außenseite der Auslegerelemente 25 derart befestigt sind, daß die Stützrollen 27 und 28 die Laufschiene 29 von der Ober- und der Unterseite her beaufschlagen.

Wie aus den Fig. 10 bis 12 im einzelnen ersichtlich ist, laufen die Bänder 10 unter der Bodenwand 24 der Anordnung für die Laderückwand 23 hindurch, sind aber über vordere und hintere Zugschlaufen 103 mit der Bodenwand 24 verbunden. Alternativ könnten selbstverständlich auch die Bänder 10 in die Zugschlaufen 103 übergehen, so daß die Bodenwand 24 in die Zugverbindung der Bänder 10 eingeschaltet wird. Dies würde jedoch entsprechenden Aufwand für die Befestigung der Bänder 10 an der Bodenwand 24 zur übertragung großer Zugkräfte erfordern und überdies müßte auch sichergestellt werden, daß im Bereich dieser Befestigungen keine Längungen erfolgen, welche die unelastische Eigenschaft der Bänder zum Teil wieder zunichte machen würde. Die Bänder 10 bestehen aus Aramid-Fasern, etwa dem Material Kevlar der Firma Du Pont und zeichnen sich durch geringe Dehnbarkeit aus, die durch Verbindungsstellen teilweise zunichte gemacht werden könnte, wenn nicht besondere Vorsorgemaßnahmen getroffen werden.

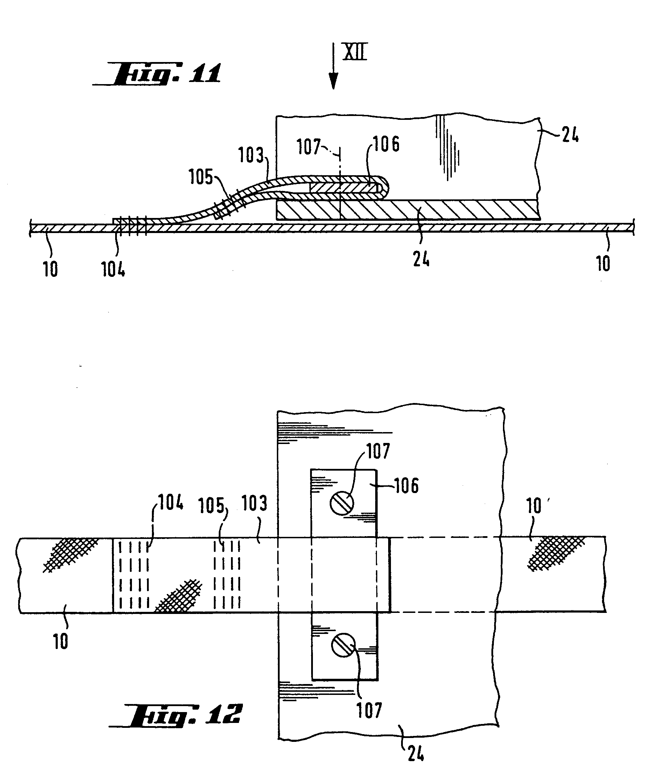

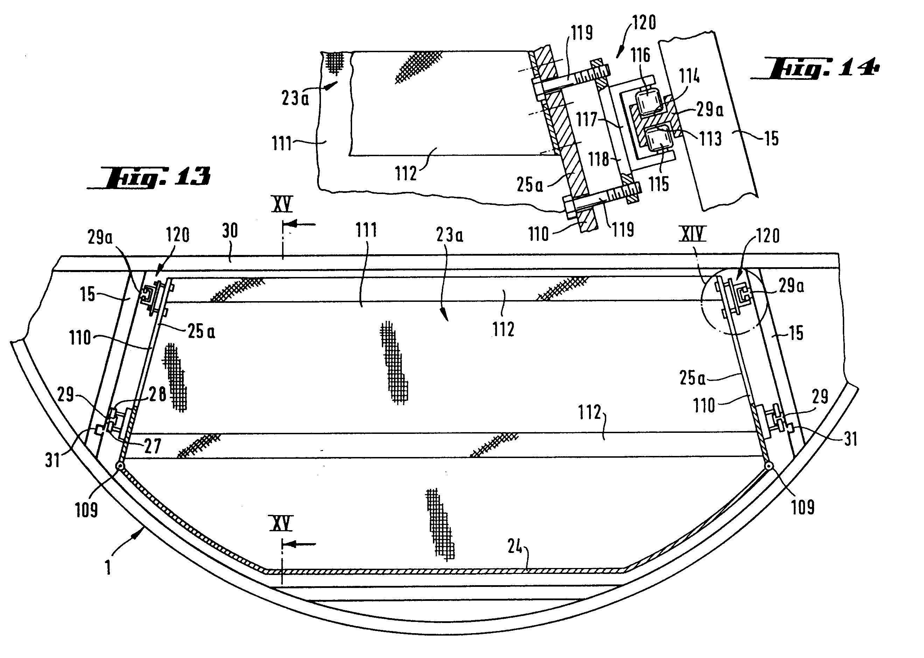

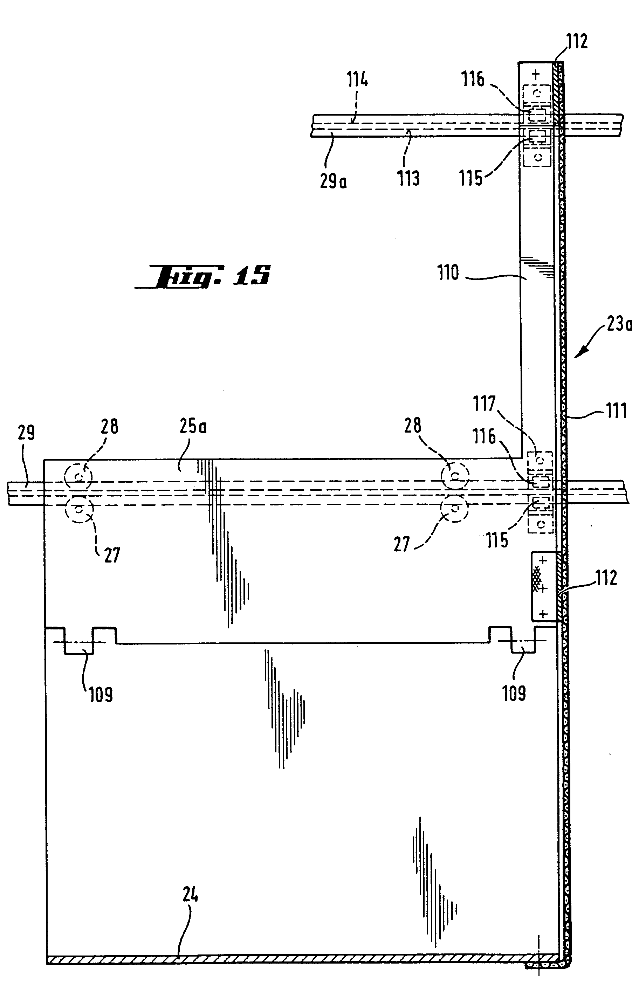

Infolge der getroffenen Anordnung beeinflußt die Laderückwand 23 das Verhalten der Bänder 10 in keiner Weise, sondern diese wird lediglich mit den Bändern 10 mitgenommen, wobei auch geringere Kräfte im Bereich der Zugschlaufen 103 auftreten als bei ihrer Einschaltung in die Zugverbindung. Wie insbesondere aus den Fig. 11 und 12 ersichtlich ist, sind die Zugschlaufen 103 durch Nähte 104 mit den Bändern 10 verbunden und durch Nähte 105 zur Bildung der Schlaufe geschlossen. Die Schlaufe übergreift einen Haltesteg 106, der beispielsweise durch seitliche Schrauben 107 mit der Bodenwand 24 verbunden ist. Während an der der Beschickungsöffnung 5 abgewandten Seite der Laderückwand 23 lediglich noch die Bänder 10 vorliegen, ist das zur Beschickungsöffnung 5 hin vor der Laderückwand 23 liegende Textilmaterial der Transportunterlage 18 über die Zugschlaufen 103 und die Bodenwand 24 gezogen sowie bei 108 (vgl. Fig. 10) in geeigneter Weise nahe der Laderückwand 23 auf der Bodenwand 24 befestigt.

Hierdurch ergibt sich eine weitgehend einheitliche und ungestörte Ladefläche in Beschickungsrichtung vor der Laderückwand 23.

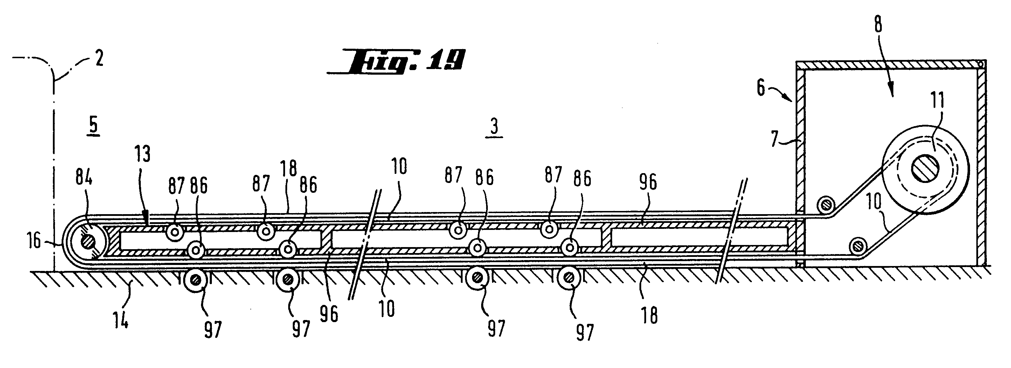

Bei der Ausführungsform gemäß Fig. 10 ist unterstellt, daß die Laderückwand 23 als solche selbsttragend etwa als massives Blech oder auch in einer Skelettkonstruktion ausgeführt ist, was zu einer gewissen Gewichtsbelastung des Transportorgans 9 führt, die im Flugzeug unerwünscht ist. Diese Gewichtsbelastung kann durch eine Ausführungsform einer Laderückwand 23a gemäß den Fig. 13 bis 15 vermindert werden. Danach ist die Bodenwand 24 beidseits mit Gelenken 109 versehen, an denen Auslegerelemente 25a angelenkt sind. Die Auslegerelemente 25a sind, wie insbesondere aus Fig. 15 ersichtlich ist, lediglich bis zur Höhe der Laufschiene 29 mit den Stützrollen 27 und 28 wangenartig ausgeführt, um die gewünschte Abstützung mit Abstand in Richtung der Tiefe des Laderaums 3 zu ermöglichen, und oberhalb dieser Abstützung lediglich noch als Haltestangen 110 ausgeführt. Die Laderückwand 23a ist in Form einer textilen Bespannung 111 ausgeführt, die zwischen der Bodenwand 24 und den Auslegerelementen 25a bzw. den Haltestangen 110 gespannt ist. Die textile Bespannung 111 kann beispielsweise dasselbe Nylongewebe wie die Transportunterlage 18 sein. Zur Erzielung einer Widerstandsfähigkeit gegen Durchbiegung und einer straffen Spannung ist die textile Bespannung 111 durch Bänder 112 verstärkt, die zwischen den Auslegerelementen 25a laufen und insbesondere den oberen Rand der textilen Bespannung 111 abschließen, der bei Anlage von Transportgut besonders leicht ausgebeult werden könnte.

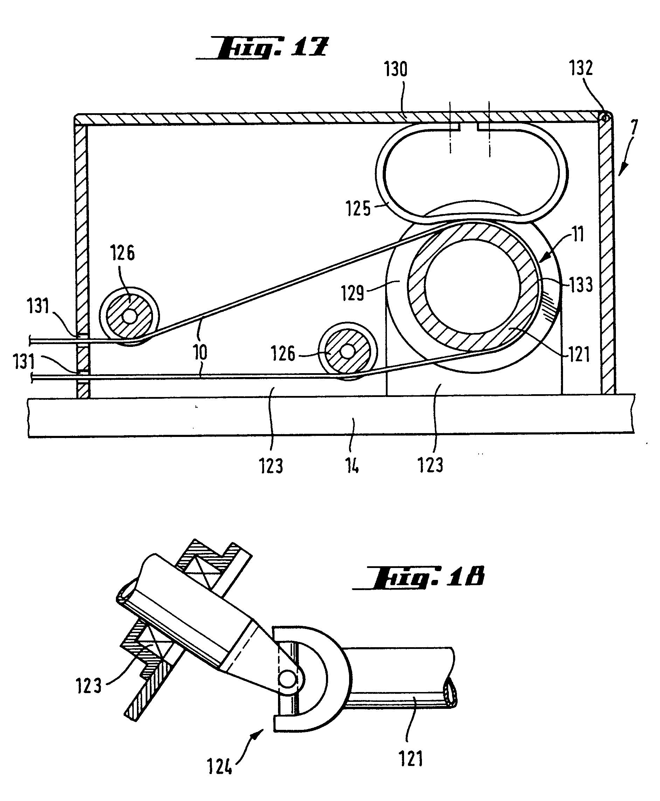

Wie insbesondere aus Fig. 14 ersichtlich ist, sind die Haltestangen 110 seitlich gegen die Seitenwände 15 des Laderaumes 3 abgespannt, um die zwischen ihnen laufenden Bänder 112 unter einen gewünschten Zug zu setzen. Hierzu ist im oberen Bereich der Seitenwände 15 des Laderaums 3 eine weitere Laufschiene 29a angeordnet, die bei Bedarf in nicht näher dargestellter Weise ebenso an dortigen Profil schienen 31 gelagert werden kann, die üblicherweise auch in diesem Bereich des Laderaums 3 vorhanden sind. In Laufnuten 113 und 114 der Laufschiene 29a greifen Spannrollen 115 und 116 ein, die jedoch anders als die Stützrollen 27 und 28 mit fluchtender Achse an der der Seitenwand 15 abliegenden, zur Seitenwand 15 parallelen Fläche der Laufnuten 113 und 114 tragen und an einem Laufwagen 117 gelagert sind. In eine Bodenplatte 118 des Laufwagens 117 greifen die Schäfte von Spannschrauben 119 ein, welche die Haltestange 110 durchgreifen. Auf diese Weise wird eine insgesamt mit 120 bezeichnete Spanneinrichtung geschaffen, mit der durch entsprechende Einschraubstellung der Spannschrauben 119 in die Bodenplatte 118 des Laufwagens 117 eine gewünschte Kraft auf das benachbart an der Haltestange 110 befestigte Band 112 aufgebracht werden kann.

Wie aus Fig. 15 ersichtlich ist, ist im Beispielsfalle ein entsprechender Laufwagen 117 zusätzlich an der Führungsschiene 29 vorgesehen, um das in der Zeichnung untere Band 112 entsprechend zu spannen, jedoch ist dies nicht in allen Fällen erforderlich, da die Abspannung an der oberen Laufschiene 29a die Spannkräfte mit günstigem Hebelarm um die Gelenke 109 herum einbringt.

Anstelle einer trogartigen Bodenwand 24, die Gewichtsbelastung mit sich bringt und durch die Laufschiene 29 mit den Rollen 27 und 28 etwa gegen die Kippkraft durch an die Laderückwand 23 oder 23a anliegendes Stückgut gesichert werden muß, kann auch mit einer im wesentlichen nur zweidimensionalen Konstruktion der Laderückwand 23 oder 23a gearbeitet werden, bei der also die in Fig. 15 vor der Haltestange 110 dargestellte weitere Konstruktion im Zusammenhang mit der Bodenwand 24 eingespart werden kann. Hierdurch ergibt sich auch der Vorteil, daß die Laderückwand 23 bzw. 23a keine exakte Parallelführung benötigt, sondern je nach auftretenden Belastungen oder Zugkräften von den Bändern 10 her auch eine gegenüber der Querebene des Flugzeuges leicht geneigte Stellung einnehmen kann, ohne zu verkanten. Ein Zurückkippen der Laderückwand 23 oder 23a unter dem Gewicht anliegenden Stückgutes kann in diesem Falle dadurch vermieden werden, daß an der der Bodenwand 24 gegenüberliegenden Rückseite der Laderückwand 23 bzw. 23a über entsprechende, ein Hebelmoment ergebende, nicht näher dargestellte Ausleger bodenseitige Stützräder vorgesehen sind. Eine solche Konstruktion eignet sich insbesondere im Zusammenhang mit einer durchgehenden Gleitplatte gemäß Fig. 19, da die Stützräder an der Rückseite der Laderückwand 23 bzw. 23a dann im Bereich zwischen den Bändern 10 unmittelbar auf der Oberseite der Gleitplatte 96 aufliegen und dort die Laderückwand 23 bzw. 23a rückseitg gegen Umkippen abstützen können. Die das gegen ein Umkippen gerichtete Aufstellmoment ergebende Gegenkraft ist die Spannkraft der Bänder 10, die im Falle auftretender Kippmomente durch anliegendes Stückgut wesentlich durch das Gewicht eben dieses Stückgutes unterstützt wird. Geringfügige Kippbewegungen im Rahmen des Spiels der Rollen 115, 116 an den Führungsschienen 29 und 29a sind unschädlich.

In Fig. 16 ist eine Möglichkeit eines Antriebs des Transportorganes 9 über der Beschickungsöffnung 5 gegenüberliegende Rollen 11 für jedes Band 10 veranschaulicht.

Bei der Ausführungsform gemäß Fig. 16 sind eine horizontale Welle 121 und seitlich anschließende geneigte Wellen 122 vorgesehen, die je über Stützlager 123 gegenüber dem Boden 14 des Laderaums 3 abgestutzt im Gehäuse 7 angeordnet sind. Zwischen den Wellen 121 und 122 sind je Universallager 124 vorgesehen, mit denen die Wellen zur Erzielung einer zwangläufig synchronen Drehung verbunden sind. Der Antrieb aller Wellen 121 und 122 erfolgt über einen nicht näher dargestellten Elektromotor und Ober ein Getriebe, welches die die Rollen 11 treibenden Wellen 121 bzw. 122 antreibt. Am Gehäuse 7 sind Druckfedern 125 oberhalb der Rollen 11 angeordnet, welche die Bänder 10 sicher auf den Drehmitnahmemitteln der Rollen 11 halten.

Wie aus Fig. 16 ersichtlich ist, werden die Bänder 10 von den Rollen 11 in geringen gegenseitigen Vertikalabstand geführt, so daß sie, wie in Fig. 1 angedeutet, durch entsprechende Durchbrüche in der vorderen Wand des Gehäuses 7 unmittelbar in den Bereich der Ladefläche des Laderaums 3 einlaufen können.

Eine Anordnung von Rollen 11 zur Auf- und Abwicklung des Bandes 10 an je unterschiedlichen parallelen Wellen 121 bzw. 122 eröffnet die Möglichkeit, bei Bedarf die Rollen 12 für die Vorderenden und die Rollen 11 für die Hinterenden der Bänder 10 separat anzutreiben, um so Bandmaterial in den Bereich der Ladefläche des Laderaums 3 zusätzlich einzubringen und die dortige Spannung abzubauen. Hierdurch wird es möglich, die Transportunterlage 18 samt den Bändern 10 bei natürlich leerem Laderaum 3 ein ganzes Stück anzuheben und die darunterliegenden Bereiche schnell und einfach zu inspizieren. Im Betrieb kann dennoch problemlos auch zwangläufiger Synchronlauf sichergestellt werden.

Wie aus Fig. 17 ersichtlich ist, sind die Rollen 11 auf den Wellen 121 bzw. 122 dadurch ausgebildet, daß der Schaft der Welle 121 bzw. 122 selbst als Wickelkern der Rollenkörper dient, und die Bildung der Wicklung bzw. Führung des Bandes 10 durch seitliche Wangen 129 auf der Welle 121 bzw. 122 gesichert ist. Man erkennt weiterhin in Fig. 18 die Abstützung der Welle 122 an einem der Stützlager 123 sowie die Verbindung zur Welle 121 über das Universalgelenk 124.

Fig. 17 veranschaulicht in vergrößerter Darstellung eine Einzelheit der Ausführungsform gemäß Fig. 16. Wie daraus ersichtlich ist, weist das Gehäuse 7 einen um ein Scharnier 132 aufklappbaren Deckel 130 auf, an dessen Innenseite die Druckfedern 125 zur Druckbeaufschlagung der Umschlingungen 133 der Bänder 10 auf den Rollen 11 befestigt sind. Die Druckfedern 125 sind dabei als einfache Federbügel aus Kunststoff ausgebildet. Beim öffnen des Gehäusedeckels 130 wird die Oberseite der Umschlingung 133 somit frei zugänglich.

Anstelle der dargstellten bügelförmigen Druckfedern 125 kann in nicht näher dargestellter Weise auch eine Konstruktion eines Niederdrückelementes in Form eines Klotzes mit einer Auflagerundung erfolgen, der an die Umschlingung 133 angedrückt ist. Für den hier dargestellten Fall, daß ein Endlosband 10 etwa in Form eines Zahnriemens oder dergleichen über ein Zahnrad umgelenkt ist, kann ein solcher Andruckklotz bei hart abgefederter oder unelastischer Lagerung jegliche Gefahr vermeiden, daß das Band 10 in Form eines Zahnriemens oder dergleichen aus seinem Formschlußeingriff herausspringt.

Die Bänder 10 verlassen das Gehäuse 7 durch Durchtrittsschlitze 131 in einer bestimmten Höhenlage. Dabei sind die Bänder 10 über die bereits angesprochenen Niederhalter 126 in Form von Führungsrollen geführt, welche die registerhaltige Lage der Bänder 10 zum jeweiligen Durchtrittsschlitz 131 sicherstellen.

Bei endloser Ausbildung der Bänder 10 und deren Umlenkung über pro Band 10 eine einzige Rolle 11, welche kein Band 10 aufwickelt, ist lediglich dafür zu sorgen, daß Antriebskräfte von den Rollen 11 auf das jeweilige Band 10 möglichst schlupffrei aufgebracht werden können. Neben einer reibungserhöhenden Oberfläche der dann natürlich mit der Welle 121, 122 drehenden Rolle 11, etwa aus Gummi oder dergleichen, ist hierzu in nicht näher dargestellter Weise eine Formschlußausbildung der Bänder 10 etwa als Zahnriemen oder mit Mitnahmeausnehmungen vorgesehen, in welche Mitnahmeelemente der Rollen 11 eingreifen können. In dem zwischen den Rollen 11 und den Niederhaltern 126 laufenden Abschnitt der Bänder 10 kann bei Bedarf eine Spanneinrichtung für die Aufrechterhaltung einer Mindestspannung im jeweiligen Band 10 sorgen, während der eigentliche Antrieb ebenso erfolgen kann, wie im Zusammenhang mit Fig. 16 erläutert. Die für den Formschlußantrieb geeignete Sonderausbildung der Bänder 10 als Zahnriemen, Lochbänder oder dergleichen kann zur Bildung eines echt durchgehenden Zugelementes über die ganze Länge vorgesehen sein, ist aber funktionell lediglich in dem Bereich der Bänder 10 erforderlich, der bei der Hin- und Herbewegung mit den Rollen 11 in Berührung kommt. Im Bereich der Transportunterlage 18 kann daher bei Bedarf auch eine andere, etwa flachere Ausbildung der Bänder 10 als im eigentlichen Antriebsbereich gewählt werden. Auch eine solche mehrstückige Ausbildung eines endlos umlaufenden Bandes 10 ist funktionell als Endlosband zu verstehen. Wie in allen bisher erläuterten Ausführungsformen ist der Antrieb zweckmäßig so ausgestaltet, daß bei stillstehendem Antriebsmotor eine Verriegelung des Antriebes erfolgt, so daß die Laderückwand 23 entweder unmittelbar von dort vorgesehenen Antrieben her oder über die Bänder 10 in der jeweiligen Stellung gegen Bewegung verriegelt ist.

Das Führungsprofil 13 ist mit der dieses verlängernden Gleitplatte 96 das einzig formstabile Teil, welches über dem Boden 14 des Laderaums 3 im Bereich der Beschickungsöffnung 5 angeordnet ist. Da das Führungsprofil 13 einen Durchtritt der Bänder 10 und der Transportunterlage 18 zwischen seiner Unterseite und dem Boden 14 des Laderaums 3 im dortigen Spalt 83 gestattet, biegt es sich unter einer auf dem Führungsprofil 13 liegenden Last unter Verminderung des Spaltes 83 geringfügig durch, insbesondere dann, wenn Stützrollen 85 und 86 nicht vorhanden sind oder einen entsprechenden gegenseitigen Abstand halten, der eine solche Bewegung ermöglicht. Daher ist der Spannungszustand im Führungsprofil 13 zwischen den Halteschienen 50 ein Indikator für die bei ruhendem Transportorgan 9 auf ihm befindliche Last, so daß das Führungsprofil 13 gewissermaßen als automatische Waage des aufgebrachten Ladeguts dienen kann. Hierzu kann an einer bei Druckbelastung der Oberseite des Führungsprofils 13 zugbelasteten Fläche wenigstens ein Dehnmeßelement vorgesehen werden. Selbstverständlich wird das Dehnmeßelement zweckmäßig so angeordnet, daß es nicht einer Punktlast von Ladegut oder sonstigen verschleißenden oder beschädigenden Kräften ausgesetzt ist, also beispielsweise versenkt in einer Außenoberfläche oder an einer Innenoberfläche des Führungsprofils 13 angeordnet. Auch kann eine Mehrzahl von Dehnmeßelementen etwa in Form von Dehnmeßstreifen vorgesehen und über eine geeignete Auswerteeinrichtung ein Indikator für das Gewicht ermittelt werden. Bei zu hohem Gewicht kann durch eine einfache Elektronik eine Anzeigelampe in Betrieb gesetzt oder aber auch der Antrieb des Transportorganes 9 außer Betrieb gesetzt werden. Auf diese Weise ist eine überladung des Bodens 14 mit Gewißheit zu vermeiden, wobei durch entsprechende Mehrfachanordnung und Einzelauswertung von Sensoren auch nur lokale überlastungen bei Bedarf ebenfalls ermittelt werden könnten.

Die Profilschienen 31 können jedenfalls in denjenigen Abschnitten, die nicht zur Befestigung der Rampe 61, des Führungsprofils 13, der Gleitplatte 96 oder der Laufschiene 29 dienen, ihrem eigentlichen Zweck, nämlich der Vertäuung von Ladegut dienen. Es versteht sich, daß für einen solchen Sonderfall, in dem das Ladegut nach der Vertäuung nicht mehr mit der Transportunterlage 18 bewegt werden darf, sichergestellt werden muß, daß der Antrieb für das Transportorgan 9 nicht bei festgezurrtem Gut in Betrieb gesetzt wird.

Wie die vorstehende Beschreibung zeigt, sind vielfache Abwandlungen und Abänderungen der Erfindung möglich, ohne den Rahmen der Erfindung zu verlassen. Wesentlich ist in jedem Falle, daß das Transportorgan 9 flach den Boden 14 des Laderaums 3 bedeckt und infolge geringer Bauhöhe keine merkliche Verminderung des Ladevolumens zur Folge hat. Weiter ist wesentlich, daß das Transportorgan 9 schrittweise je nach Bedarf bewegt werden kann und so seine Transportfunktion den jeweiligen Verhältnissen des Einzelfalls entsprechend ausführen kann. Weiter ist von besonderer Bedeutung, daß über die Konzentration sämtlicher Zugkräfte in den im Abstand voneinander liegenden einzelnen Bändern 10 auch ein gewölbter Boden 14 des Laderaums 3 völlig problemlos durch entsprechende Anordnung von Wellen 121 bzw. 122 einerseits und entsprechend unebene Ausbildung des Führungsprofils 13 andererseits flach bedeckt werden kann, da das Transportorgan 9 jeder beliebigen Bodenkontur problemlos angepaßt werden kann. Durch Nutzung der in Flugzeugladeräumen regelmäßig vorgesehenen Profilschienen 31 für die Verzurrung von Ladegut, die hohe Kräfte aufzunehmen vermögen, für die Lagerung bei Bedarf sämtlicher Teile des Transportorganes 9 im Bereich der Ladefläche des Laderaums 3 können zusätzliche Befestigungsmaßnahmen entfallen, die besonders im Flugzeugbereich problematisch sind.

## Patentansprüche

1. Einrichtung zum Beladen eines Laderaums (3), insbesondere eines Flugzeugs, mit Stückgut,
mit wenigstens einem von einer Beschickungsöffnung (5) des Laderaums (3) aus in Richtung auf dessen gegenüberliegendes Ende (6) und zurück motorisch bewegbaren Transportorgan (9),
das flächig den Boden (14) des Laderaums (3) abdeckt und mit welchem im Bereich der Beschickungsöffnung (5) auf das Transportorgan (9) aufgegebenes Stückgut von der Beschickungsöffnung (5) weg in den Laderaum (3) hinein und beim Entladen wieder in Richtung auf die Beschickungsöffnung (5) zurück transportierbar ist,
das eine Mehrzahl im Abstand nebeneinander angeordneter zugfester flexibler Zugelemente (Bänder 10) aufweist, die an dem der Beschickungsöffnung (5) gegenüberliegenden Ende (6) des Laderaums (3) auf Rollen (11) gehalten sind,
das auf einem wenigstens annähernd der Tiefe des Laderaums (3) entsprechenden Abschnitt eine teppichartige Transportunterlage (18) aus einem flexiblen Textilmaterial aufweist, und
das an einer Mehrzahl von im Bereich der Beschickungsöffnung (5) angeordneten drehbaren Umlenkrollen (84) umgelenkt ist,
dadurch gekennzeichnet,
daß die Umlenkrollen (84) an einem zwischen den oberen und unteren Teilen des Transportorgans (9) angeordneten Führungsprofil (13) befestigt sind,
daß der motorische Antrieb (8) für das Transportorgan (9) im Bereich des der Beschickungsöffnung (5) gegenüberliegenden Endes (6) des Laderaums (3) angeordnet ist, und
daß das Führungsprofil (13) an seiner den Umlenkrollen (84) gegenüberliegenden Seite durch eine andernends gegen den Antrieb (8) abgestützte Gleitplatte (96) gegen die Zugspannung des Transportorgans (9) abgestützt ist.

2. Einrichtung nach Anspruch 1, dadurch gekennzeichnet, daß die Bänder (10) jedenfalls in funktioneller Hinsicht als Endlosbänder ausgebildet sind, die über Rollen (11) an dem der Beschickungsöffung (5) gegenüberliegenden Ende (6) des Laderaums (3) umgelenkt sind.

3. Einrichtung nach Anspruch 2, dadurch gekennzeichnet, daß die Bänder (10) für einen formschlüssigen Bewegungsantrieb ausgebildet, beispielsweise mit Antriebsausnehmungen versehen oder als Zahnriemen ausgebildet sind.

4. Einrichtung nach einem der Ansprüche 1 bis 3, dadurch gekennzeichnet, daß auf den Bändern (10) im Bereich des in Beschickungsrichtung (Pfeil 19) gesehen hinteren Endes der Transportunterlage (18) eine Teil des Transportorgans (9) bildende Laderückwand (23) angeordnet ist.

5. Einrichtung nach Anspruch 4, dadurch gekennzeichnet, daß die Laderückwand (23; 23a) über seitliche Auslegerelemente (25; 25a) mit in Bewegungsrichtung (Pfeile 19, 20) im Abstand voneinander angeordneten Abstützelementen (Stützrollen 27, 28), die an Laufschienen (29) an den Seitenwänden (15) des Laderaums (3) laufen und/oder bodenseitig abgestützt sind, gegen Kippen gesichert ist.

6. Einrichtung nach einem der Ansprüche 1 bis 5, dadurch gekennzeichnet, daß die an die Hinterkannte (17) des Führungsprofils (13) anschließende Gleitplatte (96) eine gute Gleiteigenschaften aufweisende Oberfläche, beispielsweise aus gleitfähigem Kunststoff wie Polytetrafluorethylen (Teflon®) aufweist und wenigstens über die halbe Tiefe, vorzugsweise über die gesamte Tiefe des Laderaums (3) reicht.

7. Einrichtung nach Anspruch 6, dadurch gekennzeichnet, daß die Gleitplatte (96) das Führungsprofil (13) an der der Umlenkkante (16) gegenüberliegenden Seite unmittelbar abstützt.

8. Einrichtung nach Anspruch 6 oder 7, dadurch gekennzeichnet, daß die Gleitplatte (96) an den flugzeugseitigen Profilschienen (31; 31a) an den Seitenwänden (15) des Laderaums (3) befestigt ist.

9. Einrichtung nach einem der Ansprüche 1 bis 8, dadurch gekennzeichnet, daß im Bereich der Bänder (10) wenigstens im mittleren Teil des Führungsprofils (13) zwischen den Seitenwänden (15) des Laderaums (3) Stützrollen (85, 86, 87, 97) im Boden (14) des Laderaums (3) und/oder an der Unterseite und/oder der Oberseite des Führungsprofils (13) und/oder an einer daran anschließenden Gleitplatte (96) vorgesehen sind.

10. Einrichtung nach Anspruch 9, dadurch gekennzeichnet, daß bodenseitige Stützrollen (85, 86) nahe der Umlenkkante (16) des Führungsprofils (13) vorgesehen sind.

11. Einrichtung nach einem der Ansprüche 1 bis 10, dadurch gekennzeichnet, daß die Umlenkrollen (84) im Bereich der Bänder (10) an der Umlenkkante (16) im Führungsprofil (13) gelagert sind und bevorzugt allenfalls geringfügig über die Kontur der Umlenkkante (16) vorstehen.

12. Einrichtung nach einem der Ansprüche 1 bis 11, dadurch gekennzeichnet, daß an der der Umlenkkante (16) des Führungsprofils (13) gegenüberliegenden Seite der Transportunterlage (18) eine Abdichteinrichtung (64; 65) in enger Nachbarschaft bzw. Berührung mit der Transportunterlage (18) angeordnet ist, wobei die Abdichteinrichtung (64, 65) vorzugsweise als Bürstenanordnung (66; 72) ausgebildet ist, unterhalb der zweckmäßig eine Schmutzfangwanne (75) angeordnet ist.

13. Einrichtung nach einem der Ansprüche 1 bis 12, dadurch gekennzeichnet, daß die Rollen (11) zum Umlenken der antriebsseitigen Enden der Bänder (10) bei gewölbter Ausbildung des Bodens (14) des Laderaums (3) bzw. der Transportunterlage (18) auf nebeneinander liegenden, gegeneinander geneigt angeordneten Wellen (121, 122) befestigt sind.

## Claims

1. Means for loading packages into a cargo hold (3), in particular of an aeroplane,
comprising at least one conveyor (9) which is motor-driven such as to be movable from a charging opening (5) of said storage hold (3) in the direction of the opposite end (6) thereof and back,
said conveyor (9) covering the surface of the floor (14) of said storage hold (3) and providing for the possibility of transporting packages charged onto the conveyor (9) in the area of the charging opening (5) away from said charging opening (5) into said storage hold (3), and back again towards said charging opening (5) for unloading,
said conveyor (9) comprising a plurality of traction resistant, flexible traction elements (belts 10) which are arranged at a distance beside each other and held on rollers (11) at the end (6) of said cargo hold (3) opposite said charging opening (5),
said conveyor (9) comprising a carpet-type transport support (18) of a flexible textile material on a portion at least approximately corresponding to the depth of said cargo hold (3), and
said conveyor (9) being deflected on a plurality of rotatable deflection rollers (84) positioned in the area of said charging opening (5),
characterised in that
said deflection rollers (84) are fastened to a guide profile (13) positioned between the upper and lower parts of said conveyor (9),
the motor drive means (8) for said conveyor (8) is positioned in the area of the end (6) of said cargo hold (3) opposite said charging opening (5), and
said guide profile (13), on its side opposite said deflection rollers (84), is supported against the tractional tension of said conveyor (9) by a sliding panel (96) which is supported against the drive means (8) at its other end.

2. Means according to claim 1, characterised in that said belts (10), at least with respect to their function, have the form of endless belts which are deflected by rollers (11) at the end (6) of said cargo hold (3) opposite said charging opening (3).

3. Means according to claim 2, characterised in that said belts (10) are formed for positive motional drive, e.g. provided with drive recesses or having the form of tooth belts.

4. Means according to any one of claims 1 through 3, characterised in that, in the area of the rear end of said transport support (18) when viewed in charging direction (arrow 19), a loading rear wall (23) forming part of said conveyor (9) is positioned on said belts (10).

5. Means according to claim 4, characterised in that said loading rear wall (23; 23a) is secured against toppling over by lateral outrigger elements (25; 25a) comprising supporting elements (support rollers 27, 28) which are arranged at a mutual distance in the direction of movement (arrows 19, 20) and running on rails (29) at the side walls (15) of said cargo hold (3).

6. Means according to any one of claims 1 through 5, characterised in that said sliding panel (96) arranged adjacently to the rear edge (17) of said guide profile (13) comprises a surface having good sliding properties, e.g. of a slidable plastic material such as polytetrafluoroethylene (Teflon®), and covers at least half of the entire depth, preferably the entire depth of said cargo hold (3).

7. Means according to claim 6, characterised in that said sliding panel (96) directly supports said guide profile (13) at the side immediately opposing the deflecting edge (16)

8. Means according to claim 6 or 7, characterised in that said sliding panel (96) is fastened to the aeroplane-side profile rails (31; 31a) on the side walls (15) of said cargo hold (3).

9. Means according to any one of claims 1 through 8, characterised in that in the area of said belts (10), at least in the central part of said guide profile (13) between the side walls (15) of said cargo hold (3), support rollers (85, 86, 87, 97) are provided in the floor (14) of said cargo hold (3) and/or at the bottom side and/or the top side of said guide profile (13) and/or at a sliding panel (96) positioned adjacently to it.

10. Means according to claim 9, characterised in that floor-side support rollers (85, 86) are provided in the vicinity of the deflecting edge (16) of said guide profile (13).

11. Means according to any one of claims 1 through 10, characterised in that said deflection rollers (84) are mounted in said guide profile (13) in the area of said belts (10) at the deflecting edge (16), and in a case where they project beyond the contour of said deflecting edge (16), the amount of projection is preferably small.

12. Means according to any one of claims 1 through 11, characterised in that on the side of said transport support (18) opposing the deflecting edge (16) of said guide profile (13), a shutting device (64; 65) is arranged in the close vicinity of, or in contact with said transport support (18), said shutting device (64; 65) preferably having the form of an array of brushes (66; 72) and having a dust collecting tray (75) suitably arranged underneath it.

13. Means according to any one of claims 1 through 12, characterised in that in order to deflect the drivenside ends of said belts (10), said rollers (11) are fastened on laterally adjacent shafts (121, 122) which are inclined against each other, the floor (14) of said cargo hold (3), or of said transport support (18), having a curved shape.

## Revendications

1. Dispositif pour charger de colis un espace de chargement (3), notamment d'un avion,
avec au moins un organe de transport (9) qui, de façon motorisée, peut être déplacé depuis une ouverture de chargement (5) de l'espace de chargement (3) en direction de l'extrémité opposée (6) dudit espace, et retour,
organe qui recouvre à plat le fond (14) de l'espace de chargement (3) et au moyen duquel un colis, délivré sur l'organe de transport (9) dans la région de l'ouverture de chargement (5), peut être transporté à l'intérieur de l'espace de chargement (3) en éloignement de l'ouverture de chargement (5) et, lors du déchargement, ramené en direction de l'ouverture de chargement (5),
qui présente une pluralité d'éléments de traction (bandes 10) flexibles et résistants à la traction, disposés à distance les uns à côté des autres, qui sont maintenus sur des poulies (11) à l'extrémité (6) de l'espace de chargement (3) qui est opposée à l'ouverture de chargement (5),
qui présente, sur un tronçon correspondant au moins approximativement à la longueur de l'espace de chargement (3), un support de transport (18) du genre tapis réalisé en une matière textile flexible,
et qui est renvoyé par une pluralité de poulies de renvoi rotatives (84), disposées dans la région de l'ouverture de chargement (5),
**caractérisé** en ce que les poulies de renvoi (84) sont fixées sur un profilé de guidage (13) disposé entre les parties supérieure et inférieure de l'organe de transport (9),
en ce que l'entraînement motorisé (8) pour l'organe de transport (9) est disposé dans la région de l'extrémité (6) de l'espace de chargement (3) qui est opposée à l'ouverture de chargement (5),
et en ce que le profilé de guidage (13) est, sur son côté opposé aux poulies de renvoi (84), soutenu contre la tension de traction de l'organe de transport (9) par une plaque de glissement (96), qui est soutenue contre l'entraînement (8) à son autre extrémité.

2. Dispositif selon la revendication 1, **caractérisé** en ce que les bandes (10) sont réalisées, du moins du point de vue fonctionnel, sous la forme de bandes sans fin qui sont renvoyées par des poulies (11) à l'extrémité (6) de l'espace de chargement (3) qui est opposée à l'ouverture de chargement (5).

3. Dispositif selon la revendication 2, **caractérisé** en ce que les bandes (10) sont conçues pour un entraînement en déplacement par engagement positif, étant par exemple pourvues d'évidements d'entraînement ou réalisées sous la forme de courroies dentées.

4. Dispositif selon l'une quelconque des revendications 1 à 3, **caractérisé** en ce qu'une cloison arrière de chargement (23), formant partie de l'organe de transport (9), est disposée sur les bandes (10) dans la région de l'extrémité arrière, vu dans la direction de chargement (flèche 19), du support de transport (18).

5. Dispositif selon la revendication 4, **caractérisé** en ce que la cloison arrière de chargement (23 ; 23a) est, par l'intermédiaire de consoles latérales (25 ; 25a), empêchée de basculer par des éléments de soutien (galets de soutien 27, 28), disposés à distance mutuelle dans la direction de déplacement (flèches 19, 20), qui roulent sur des rails de roulement (29) sur les parois latérales (15) de l'espace de chargement (3) et/ou sont soutenus du côté du fond.

6. Dispositif selon l'une quelconque des revendications 1 à 5, **caractérisé** en ce que la plaque de glissement (96), qui se raccorde au bord arrière (17) du profilé de guidage (13), présente une surface présentant de bonnes propriétés de glissement, par exemple en matière plastique permettant le glissement telle que du polytétrafluoréthylène (téflon, marque déposée), et s'étend sur au moins la moitié de la longueur, et de préférence sur la totalité de la longueur de l'espace de chargement (3).

7. Dispositif selon la revendication 6**, caractérisé** en ce que la plaque de glissement (96) soutient directement le profilé de guidage (13) sur le côté opposé au bord de renvoi (16).

8. Dispositif selon la revendication 6 ou 7, **caractérisé** en ce que la plaque de glissement (96) est fixée aux profilés (31 ; 31a) de l'avion sur les parois latérales (15) de l'espace de chargement (3).

9. Dispositif selon l'une quelconque des revendications 1 à 8, **caractérisé** en ce que, dans la région des bandes (10), au moins dans la partie médiane du profilé de guidage (13) entre les parois latérales (15) de l'espace de chargement (3), des galets de soutien (85, 86, 87, 97) sont prévus dans le fond (14) de l'espace de chargement (3) et/ou sur le dessous et/ou le dessus du profilé de guidage (13), et/ou sur une plaque de glissement (96) qui se raccorde à ce dernier.

10. Dispositif selon la revendication 9, **caractérisé** en ce que les galets de soutien (85, 86) du côté du fond sont prévus à proximité du bord de renvoi (16) du profilé de guidage (13).

11. Dispositif selon l'une quelconque des revendications 1 à 10, **caractérisé** en ce que les poulies de renvoi (84) sont montées dans la région des bandes (10) sur le bord de renvoi (16) dans le profilé de guidage (13), et dépassent de préférence au plus légèrement du contour du bord de renvoi (16).

12. Dispositif selon l'une quelconque des revendications 1 à 11, **caractérisé** en ce que, sur le côté du support de transport (18) qui est opposé au bord de renvoi (16) du profilé de guidage (13), un moyen de calfeutrage (64 ; 65) est disposé au voisinage immédiat ou en contact avec le support de transport (18), le moyen de calfeutrage (64 ; 65) étant de préférence réalisé sous la forme d'un agencement de poils de brosse (66 ; 72), en dessous duquel est opportunément disposé un bac (75) recueillant la crasse.

13. Dispositif selon l'une quelconque des revendications 1 à 12, **caractérisé** en ce que les poulies (11) destinées au renvoi des extrémités côté entraînement des bandes (10) sont, en présence d'une configuration cintrée du fond (14) de l'espace de chargement (3) ou encore du support de transport (18), fixées sur des arbres (121, 122) qui sont juxtaposés en étant mutuellement inclinés.
